(19) Europäisches Patentamt
European Patent Office
Office européen des brevets

(11) **EP 2 774 892 A1**

(12) **EUROPEAN PATENT APPLICATION**

(43) Date of publication:
**10.09.2014 Bulletin 2014/37**

(51) Int Cl.:
***B82Y 15/00*** *(2011.01)* ***G01N 21/55*** *(2014.01)*

(21) Application number: **14157811.2**

(22) Date of filing: **05.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.03.2013 JP 2013045073**

(71) Applicant: **Seiko Epson Corporation Tokyo 163-0811 (JP)**

(72) Inventors:
• **Sugimoto, Mamoru**
  **Nagano 392-8502 (JP)**
• **Mano, Tetsuo**
  **Nagano 392-8502 (JP)**
• **Enari, Megumi**
  **Nagano 392-8502 (JP)**

(74) Representative: **HOFFMANN EITLE Patent- und Rechtsanwälte Arabellastrasse 4 81925 München (DE)**

(54) **Analysis device, analysis method, optical element and electronic apparatus for analysis device and analysis method, and method of designing optical element**

(57)    An analysis device includes an optical element which includes a metal layer, a light transmitting layer provided on the metal layer to transmit light, and a plurality of metal particles arranged at a first interval in a first direction and arranged at a second interval in a second direction intersecting the first direction on the light transmitting layer, a light source which irradiates incident light incident on the optical element, and a detector which detects light emitted from the optical element. The arrangement of the metal particles of the optical element satisfies the relationship of Expression (1), and linearly polarized light in the same direction as the first direction and linearly polarized light in the same direction as the second direction are irradiated onto the optical element:

$$P1 < P2 \ \dots \ (1)$$

where, P1 represents the first interval, and P2 represents the second interval.

FIG. 1

**Description**

BACKGROUND

1. Technical Field

The present invention relates to an analysis device, an analysis method, an optical element and an electronic apparatus for an analysis device and an analysis method, and a method of designing an optical element.

2. Related Art

In the field of environment, food, public safety, and the like including a medical and health field, there is demand for a sensing technique which detects trace substances quickly and simply with high sensitivity and high precision. There are a wide variety of trace substances to be detected, and for example, bio-related materials, such as bacteria, viruses, protein, nucleic acids, and various antigens/antibodies, and various compounds including inorganic molecules, organic molecules, and polymers are to be detected. In the related art, while trace substances are detected by sampling, analysis, and parsing, since a dedicated device is required and an inspection worker needs to be skilled, analysis in this situation is difficult. For this reason, it takes a lot of time (several days or more) for an inspection result to be obtained. In the sensing technique, there is a great need for quick and simple detection, and thus, it is desirable to develop a sensor which can meet this need.

For example, from expectations of comparative ease of integration and less influence by an inspection and measurement environment, there is growing interest in a sensor which uses surface plasmon resonance (SPR), or a sensor which uses surface-enhanced Raman scattering (SERS).

Then, for the purpose of sensing with higher sensitivity, as an example of a sensor element having a structure which realizes a hybrid mode, in which both modes of a localized surface plasmon (LSP) and a propagated surface plasmon (PSP) are resonated simultaneously, International Publication No. 2009/002524 and International Publication No. 2005/114298 suggest a sensor element, called GSPP (Gap type Surface Plasmon Polariton). OPTIC EXPRESS Vol. 19, No. 16 (2011), 14919 - 14928 suggests a method which enhances Raman scattering light using an element capable of causing a hybrid of the LSP and the SPP.

In SERS disclosed in OPTIC EXPRESS Vol. 19, No. 16 (2011), 14919 - 14928, the relationship between the wavelength or polarization state of incident light and the arrangement of the array is not taken into consideration, and for this reason, a sufficient signal enhancement degree in a wide band is not necessarily obtained.

SUMMARY

An advantage of some aspects of the invention is that it provides an optical element which has an excellent enhancement degree profile of light based on a plasmon to be excited by light irradiation, and a method of designing an optical element. Another advantage of some aspects of the invention is that it provides an analysis device and an electronic apparatus including the optical element, and an analysis method.

An aspect of the invention is directed to an analysis device including an optical element which includes a metal layer, a light transmitting layer provided on the metal layer to transmit light, and a plurality of metal particles arranged at a first interval in a first direction and arranged at a second interval in a second direction intersecting the first direction on the light transmitting layer, a light source which irradiates incident light incident on the optical element, and a detector which detects light emitted from the optical element, in which the arrangement of the metal particles of the optical element satisfies the relationship of Expression (1), and linearly polarized light in the same direction as the first direction and linearly polarized light in the same direction as the second direction are irradiated onto the optical element.

$$P1 < P2 \dots (1)$$

Here, P1 represents the first interval, and P2 represents the second interval.

According to this analysis device, since a wide enhancement degree profile of light based on a plasmon of the optical element is taken, it is possible to easily perform detection and measurement of a wide range of trace substances.

Another aspect of the invention is directed to an analysis device including an optical element which includes a metal layer, a light transmitting layer provided on the metal layer to transmit light, and a plurality of metal particles arranged at a first interval in a first direction and arranged at a second interval in a second direction intersecting the first direction on the light transmitting layer, a light source which irradiates incident light incident on the optical element, and a detector which detects light emitted from the optical element, in which the arrangement of the metal particles of the optical element satisfies the relationship of Expression (1), and circularly polarized light is irradiated onto the optical element.

$$P1 < P2 \ ... \ (1)$$

Here, P1 represents the first interval, and P2 represents the second interval.

According to this analysis device, since a wide enhancement degree profile of light based on a plasmon of the optical element is taken, it is possible to easily perform detection and measurement of a wide range of trace substances.

In the analysis device according to the aspect of the invention, the arrangement of the metal particles of the optical element may satisfy the relationship of Expression (2) .

$$P1 < P2 \leq Q + P1 \ ... \ (2)$$

Here, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is c, and an irradiation angle of incident light which is an inclination angle of incident light from a thickness direction of the light transmitting layer is $\theta$.

$$(\omega \ / \ c) \cdot \{\varepsilon \cdot \varepsilon(\omega) \ / \ (\varepsilon + \varepsilon(\omega))\}^{1/2} = (\omega \ / \ c) \cdot \varepsilon^{1/2} \cdot \sin\theta + 2m\pi$$

$$/ \ Q \ (m = \pm1, \ \pm2, \ ...) \ ... \ (3)$$

According to the analysis device of this configuration, an enhancement degree profile of the optical element is larger, and it is possible to perform detection and measurement of trace substances with higher sensitivity.

In the analysis device according to the aspect of the invention, the detector may detect Raman scattering light enhanced by the optical element.

According to the analysis device of this configuration, since a wide and large enhancement degree profile of light based on a plasmon of the optical element is taken, it is possible to easily perform detection and measurement of a wide range of trace substances.

In the analysis device according to the aspect of the invention, the light source may irradiate incident light having a wavelength larger than the size of the metal particles in a thickness direction of the light transmitting layer and the size of the metal particles in the second direction onto the optical element.

According to the analysis device of this configuration, since a wide and large enhancement degree profile of light based on a plasmon of the optical element is taken, it is possible to easily perform detection and measurement of a wide range of trace substances.

In the analysis device according to the aspect of the invention, the interval P1 and the interval P2 may be equal to or greater than 120 nm and equal to or smaller than 720 nm.

According to the analysis device of this configuration, an enhancement degree profile of the optical element is larger, and it is possible to perform detection and measurement of trace substances with higher sensitivity.

In the analysis device according to the aspect of the invention, the interval P1 and the interval P2 may be equal to or greater than 60 nm and equal to or smaller than 180 nm.

According to the analysis device of this configuration, an enhancement degree profile of the optical element is larger, and it is possible to perform detection and measurement of trace substances with higher sensitivity.

In the analysis device according to the aspect of the invention, when the light transmitting layer is made of silicon dioxide, the thickness of the light transmitting layer may be equal to or greater than 20 nm and equal to or smaller than 60 nm or may be equal to or greater than 200 nm and equal to or smaller than 300 nm.

According to the analysis device of this configuration, an enhancement degree profile of the optical element is larger, and it is possible to perform detection and measurement of trace substances with higher sensitivity.

In the analysis device according to the aspect of the invention, the light source may irradiate light having a wavelength longer than the interval P1.

According to the analysis device of this configuration, an enhancement degree profile of the optical element is larger, and it is possible to perform detection and measurement of trace substances with higher sensitivity.

Still another aspect of the invention is directed to an analysis method which irradiates light onto an optical element and detects light emitted from the optical element with the irradiation of light to analyze an object, in which the optical element includes a metal layer, a light transmitting layer provided on the metal layer to transmit light, and a plurality of metal particles arranged at a first interval in a first direction and arranged at a second interval in a second direction intersecting the first direction on the light transmitting layer, the metal particles of the optical element are arranged so as to satisfy the relationship of Expression (1), and linearly polarized light in the same direction as the first direction and linearly polarized light in the same direction as the second direction are irradiated onto the optical element.

$$P1 < P2 \ ... \ (1)$$

Here, P1 represents the first interval, and P2 represents the second interval.

With this configuration, it is possible to easily perform detection and measurement of a wide range of trace substances.

Yet another aspect of the invention is directed to an analysis method which irradiates light onto an optical element and detects light emitted from the optical element with the irradiation of light to analyze an object, in which the optical element includes a metal layer, a light transmitting layer provided on the metal layer to transmit light, and a plurality of metal particles arranged at a first interval in a first direction and arranged at a second interval in a second direction intersecting the first direction on the light transmitting layer, the metal particles of the optical element are arranged so as to satisfy the relationship of Expression (1), and circularly polarized light is irradiated onto the optical element.

$$P1 < P2 \ ... \ (1)$$

Here, P1 represents the first interval, and P2 represents the second interval.

With this configuration, it is possible to easily perform detection and measurement of a wide range of trace substances.

In the analysis method according to the aspect of the invention, the metal particles of the optical element may be arranged so as to satisfy the relationship of Expression (2).

$$P1 < P2 \leq Q + P1 \ ... \ (2)$$

Here, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is c, and an irradiation angle of incident light which is an inclination angle of incident light from a thickness direction of the light transmitting layer is $\theta$.

$$(\omega \ / \ c) \cdot \{\varepsilon \cdot \varepsilon(\omega) \ / \ (\varepsilon + \varepsilon(\omega))\}^{1/2} = (\omega \ / \ c) \cdot \varepsilon^{1/2} \cdot \sin\theta + 2m\pi$$

$$/ \ Q \ (m = \pm 1, \ \pm 2, \ ...) \ ... \ (3)$$

With this configuration, it is possible to perform detection and measurement of trace substances with higher sensitivity.

In the analysis method according to the aspect of the invention, the detector may detect Raman scattering light enhanced by the optical element.

With this configuration, it is possible to perform detection and measurement of trace substances with higher sensitivity.

In the analysis method according to the aspect of the invention, at least one of the interval P1 and the interval P2 may be adjusted such that an enhancement degree profile of the optical element corresponds to the wavelength of Raman scattering light.

With this configuration, it is possible to perform detection and measurement of trace substances with higher sensitivity.

Yet another aspect of the invention is directed to an optical element including a metal layer, a light transmitting layer provided on the metal layer to transmit light, and a plurality of metal particles arranged at a first interval in a first direction and arranged at a second interval in a second direction intersecting the first direction on the light transmitting layer, in which the metal particles of the optical element are arranged so as to satisfy the relationship of Expression (1), and linearly polarized light in the first direction and linearly polarized light in the second direction are irradiated to enhance Raman scattering light.

$$P1 < P2 \ldots (1)$$

Here, P1 represents the first interval, and P2 represents the second interval.

According to this optical element, since a wide and large enhancement degree profile of light based on a plasmon is taken, it is possible to use the optical element for detection and measurement of a wide range of trace substances.

Still yet another aspect of the invention is directed to an optical element including a metal layer, a light transmitting layer provided on the metal layer to transmit light, and a plurality of metal particles arranged at a first interval in a first direction and arranged at a second interval in a second direction intersecting the first direction on the light transmitting layer, in which the metal particles of the optical element are arranged so as to satisfy the relationship of Expression (1), and circularly polarized light is irradiated to enhance Raman scattering light.

$$P1 < P2 \ldots (1)$$

Here, P1 represents the first interval, and P2 represents the second interval.

According to this optical element, since a wide and large enhancement degree profile of light based on a plasmon is taken, it is possible to use the optical element for detection and measurement of a wide range of trace substances.

In the optical element according to the aspect of the invention, the metal particles of the optical element may be arranged so as to satisfy the relationship of Expression (2).

$$P1 < P2 \leq Q + P1 \ldots (2)$$

Here, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is c, and an irradiation angle of incident light which is an inclination angle of incident light from a thickness direction of the light transmitting layer is $\theta$.

$$(\omega / c) \cdot \{\varepsilon \cdot \varepsilon(\omega) / (\varepsilon + \varepsilon(\omega))\}^{1/2} = (\omega / c) \cdot \varepsilon^{1/2} \cdot \sin\theta + 2m\pi$$

$$/ Q \ (m = \pm 1, \pm 2, \ldots) \ldots (3)$$

According to the optical element of this configuration, an enhancement degree profile is larger, and it is possible to use the optical element for detection and measurement of trace substances with higher sensitivity.

Further another aspect of the invention is directed to a method of designing an optical element, in which the optical element includes a metal layer, a light transmitting layer provided on the metal layer to transmit light, and a plurality of metal particles arranged at an interval P1 in a first direction and arranged at an interval P2 in a second direction intersecting the first direction on the light transmitting layer, and at least one of the interval P1 and the interval P2 is adjusted such that an enhancement degree profile of the optical element corresponds to a wavelength of Raman scattering light and a wavelength of excitation light of an object.

With this configuration, it is possible to cause the optical element to be adapted to detection and measurement of a wide range of trace substances.

Still further another aspect of the invention is directed to an electronic apparatus including the above-described analysis device, a calculation unit which calculates health and medical information on the basis of detection information from the detector, a storage unit which stores the health and medical information, and a display unit which displays the health and medical information.

According to this electronic apparatus, it is possible to perform detection and measurement of trace substances with high sensitivity.

In the electronic apparatus according to the aspect of the invention, the health and medical information may include information relating to the presence/absence or the amount of at least one bio-related material selected from a group consisting of bacteria, viruses, protein, nucleic acids, and antigens/antibodies, or at least one compound selected from inorganic molecules and organic molecules.

According to the electronic apparatus of this configuration, it is possible to provide useful health and medical information.

BRIEF DESCRIPTION OF THE DRAWINGS

The invention will be described with reference to the accompanying drawings, wherein like numbers reference like elements.

Fig. 1 is a schematic view of an analysis device of an embodiment.

Fig. 2 is a perspective view schematically showing an optical element of an embodiment.

Fig. 3 is a schematic view when the optical element of the embodiment is viewed from a thickness direction of a light transmitting layer.

Fig. 4 is a schematic view of a cross-section perpendicular to a first direction of the optical element of the embodiment.

Fig. 5 is a schematic view of a cross-section perpendicular to a second direction of the optical element of the embodiment.

Fig. 6 is a schematic view when the optical element of the embodiment is viewed from the thickness direction of the light transmitting layer.

Fig. 7 is a graph of a dispersion relation representing a light line and a dispersion curve of gold.

Fig. 8 is a schematic view when an optical element of a modification example of the embodiment is viewed from a thickness direction of a light transmitting layer.

Fig. 9 is a graph showing the relationship between a dielectric constant of Ag and a wavelength.

Fig. 10 is a graph showing a dispersion relation of a dispersion curve of a metal, a localized surface plasmon, and incident light.

Fig. 11 is a schematic view of an electronic apparatus of an embodiment.

Fig. 12 is a schematic view showing an example of a model according to an experimental example.

Fig. 13 is a graph showing an example of wavelength dependence of reflectance according to an experimental example.

Fig. 14 is a graph showing an example of wavelength dependence of ECS according to an experimental example.

Fig. 15 is a graph showing an example of wavelength dependence of ECS according to an experimental example.

Fig. 16 is a graph showing an example of wavelength dependence of ECS according to an experimental example.

Fig. 17 is a graph showing an example of wavelength dependence of ECS according to an experimental example.

Fig. 18 is a graph showing an example of wavelength dependence of ECS according to an experimental example.

Fig. 19 is a graph showing an example of wavelength dependence of ECS according to an experimental example.

Fig. 20 is a graph showing an example of wavelength dependence of ECS according to an experimental example.

DESCRIPTION OF EXEMPLARY EMBODIMENTS

Hereinafter, some embodiments of the invention will be described. In the following embodiments, an example of the invention will be described. It should be noted that the invention is not limited to the following embodiments, and various modification examples may be carried out within the scope without departing from the gist of the invention. It is not always true that all configurations described below are the essential configuration of the invention.

1. Analysis Device

An analysis device 1000 according to this embodiment includes an optical element 100, a light source 300 which irradiates incident light onto the optical element 100, and a detector 400 which detects light emitted from the optical element 100.

1.1. Optical Element

The optical element 100 serves a function of enhancing light in the analysis device 1000. The optical element 100 may be used in contact with a sample to be analyzed by the analysis device 1000. The arrangement of the optical element 100 in the analysis device 1000 is not particularly limited, and the optical element 100 may be installed on a stage or the like on which an installation angle or the like is adjustable.

Hereinafter, the optical element 100 will be described in detail.

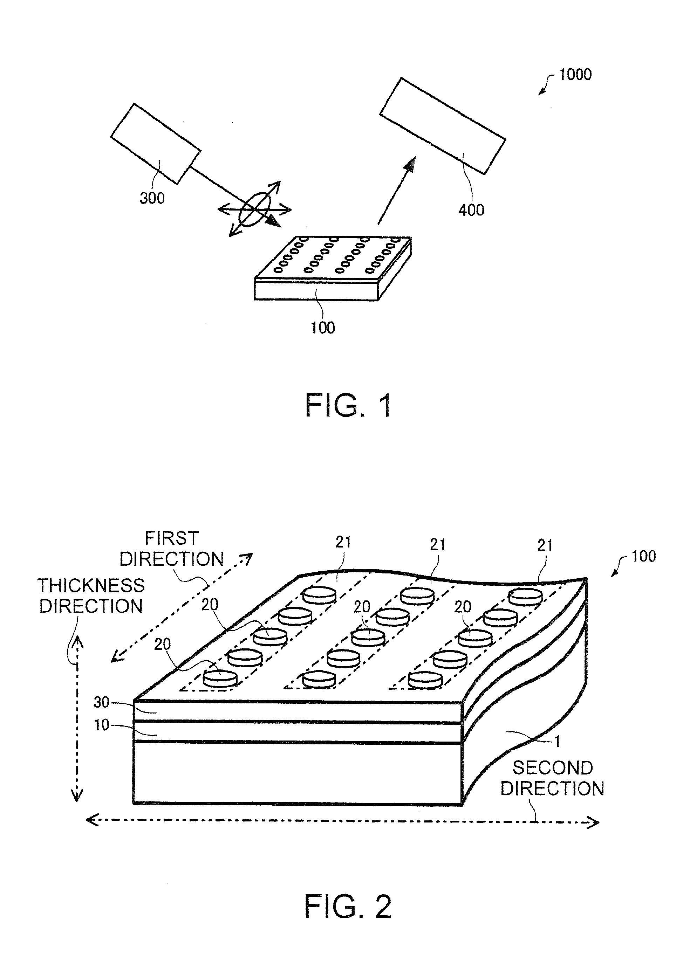

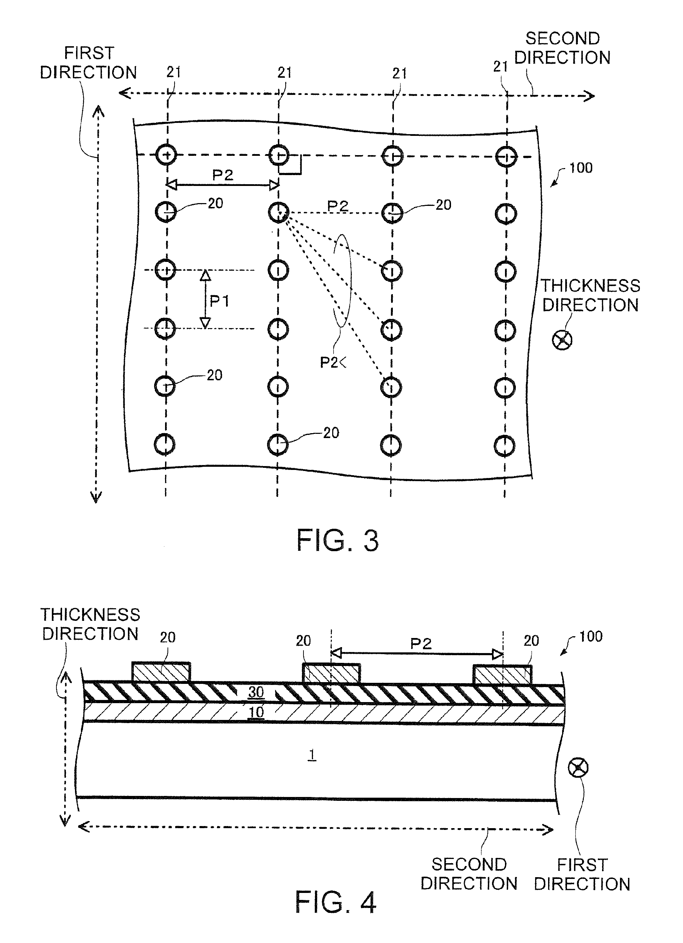

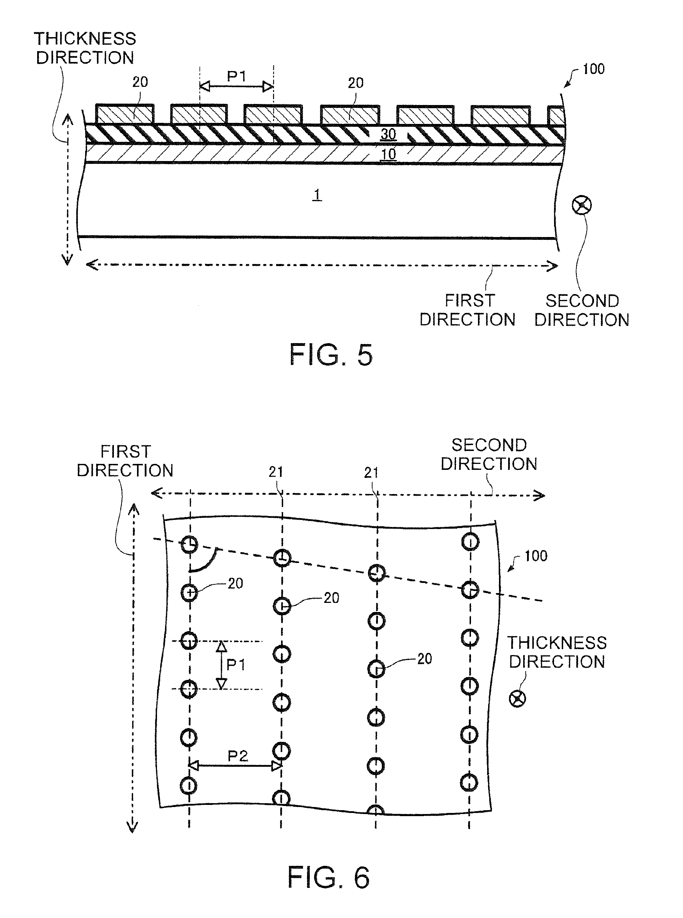

Fig. 2 is a perspective view schematically showing the optical element 100 of this embodiment. Fig. 3 is a schematic view when the optical element 100 of this embodiment is viewed in plan view. Figs. 4 and 5 are schematic views of a cross-section of the optical element 100 of this embodiment. Fig. 6 is a schematic view when the optical element 100 of this embodiment is viewed from a thickness direction of a light transmitting layer 30. The optical element 100 of this embodiment includes a metal layer 10, metal particles 20, and a light transmitting layer 30.

1.1.1. Metal Layer

The metal layer 10 is not particularly limited insofar as a metal surface which does not transmit light is provided, and for example, may have a thick plate shape or a shape of a film, a layer, or a membrane. For example, the metal layer 10 may be provided on a substrate 1. In this case, the substrate 1 is not particularly limited, and it is preferable that the substrate 1 is less likely to affect a propagated surface plasmon excited in the metal layer 10. As the substrate 1, for example, a glass substrate, a silicon substrate, a resin substrate, or the like may be used. The shape of the surface of the substrate 1 on which the metal layer 10 is provided is not particularly limited. If a regular structure is formed on the surface of the metal layer 10, the substrate may have a surface corresponding to the regular structure, and if the surface of the metal layer 10 is a plane, the surface of the substrate may be a plane. In the example of Figs. 2 to 6, the metal layer 10 is provided on the surface (plane) of the substrate 1.

Here, although the expression of "plane" is used, the related expression does not indicate a mathematically strict plane which is flat (smooth) with no slight unevenness. For example, the surface has unevenness due to constituent atoms or unevenness due to a secondary structure (crystal, grain aggregate, grain boundary, or the like) of a constituent material, and is not a strict plane from a microscopic viewpoint. However, even in this case, from a more macroscopic viewpoint, unevenness is less noticeable, and the surface is observed to such an extent that the surface may be referred to as a plane. Accordingly, in this specification, it is assumed that, when the surface is recognizable as a plane from a more macroscopic viewpoint, the surface is referred to as a plane.

In this embodiment, the thickness direction of the metal layer 10 coincides with the thickness direction of the light transmitting layer 30 described below. In this specification, the thickness direction of the metal layer 10 or the thickness direction of the light transmitting layer 30 may be referred to as a depthwise direction, a height direction, or the like upon description of the metal particles 20 described below. For example, if the metal layer 10 is provided on the surface of the substrate 1, the normal direction of the surface of the substrate 1 may be referred to as, a thickness direction, a depthwise direction, or a height direction.

For example, the metal layer 10 can be formed using a method, such as vapor deposition, sputtering, casting, machining, or the like. If the metal layer 10 is provided on the substrate 1, the metal layer 10 may be provided on the entire surface of the substrate 1 or may be provided on a part of the surface of the substrate 1. The thickness of the metal layer 10 is not particularly limited insofar as the propagated surface plasmon is excited in the metal layer 10, and for example, can be equal to or greater than 10 nm and equal to or smaller than 1 mm, preferably, equal to or greater than 20 nm and equal to or smaller than 100 $\mu$m, and more preferably, equal to or greater than 30 nm and equal to or smaller than 1 $\mu$m.

The metal layer 10 is made of a metal in which there are an electric field given by incident light and an electric field such that a polarization induced by the electric field vibrates in an inverse phase, that is, a metal which can have a dielectric constant such that, if a specific electric field is given, a real part of a dielectric function has a negative value (has a negative dielectric constant), and a dielectric constant of an imaginary part is smaller than the absolute value of the dielectric constant of the real part. If the dielectric constant of the imaginary part comes close to zero, since a plasmon is infinite, it is preferable that the imaginary part is smaller. Examples of a metal which can have a dielectric constant in a visible light region include gold, silver, aluminum, copper, an alloy thereof, and the like. The surface (the end surface in the thickness direction) of the metal layer 10 may or may not have a specific crystal plane.

The metal layer 10 has a function of causing a propagated surface plasmon to be generated in the optical element 100 of this embodiment. Light is incident on the metal layer 10 under the following conditions, whereby the propagated surface plasmon is generated near the surface (the end surface in the thickness direction) of the metal layer 10. In this specification, a quantum of vibration in which vibration of electric charges near the surface of the metal layer 10 and electromagnetic waves are coupled is called surface plasmon plariton (SPP). The propagated surface plasmon generated in the metal layer 10 can interact (hybrid) with a localized surface plasmon generated in the metal particles 20 described below under certain conditions.

1.1.2. Metal Particle

The metal particles 20 are provide to be separated from the metal layer 10 in the thickness direction. The metal particles 20 may be arranged to be spatially separated from the metal layer 10, and other substances, such as an insulator, a dielectric, and a semiconductor, may be provided between the metal particles 20 and the metal layer 10 in a single layer or a plurality of layers. In the example of Figs. 2 to 6 of this embodiment, the light transmitting layer 30 is provided on the metal layer 10, and the metal particles 20 are formed on the light transmitting layer 30, whereby the metal layer 10 and the metal particles 20 are arranged to be separated in the thickness direction of the light transmitting layer.

The shape of the metal particles 20 is not particularly limited. For example, the shape of the metal particles 20 may be a circular shape, an elliptical shape, a polygonal shape, an undefined shape, or a combined shape thereof when projected in the thickness direction of the metal layer 10 or the light transmitting layer 30 (in plan view from the thickness direction), or may be a circular shape, an elliptical shape, a polygonal shape, an undefined shape, or a combined shape thereof when projected in a direction orthogonal to the thickness direction. In the example of Figs. 2 to 6, although all the metal particles 20 are drawn in a columnar shape having a center axis in the thickness direction of the light transmitting layer 30, the shape of the metal particles 20 is not limited thereto.

The size in the height direction of the metal particles 20 (the thickness direction of the light transmitting layer 30) indicates the length of a zone when the metal particles 20 can be cut by a plane perpendicular to the height direction, and is equal to or greater than 1 nm and equal to or smaller than 100 nm. The size in the first direction orthogonal to the height direction of the metal particles 20 indicates the length of a zone when the metal particles 20 can be cut by a plane perpendicular to the first direction, and is equal to or greater than 5 nm and equal to or smaller than 200 nm. For example, if the shape of the metal particles 20 is a columnar shape with the height direction as a center axis, the size (the height of the column) in the height direction of the metal particles 20 is equal to or greater than 1 nm and equal to or smaller than 100 nm, preferably, equal to or greater than 2 nm and equal to or smaller than 50 nm, more preferably, equal to or greater than 3 nm and equal to or smaller than 30 nm, and still more preferably, equal to or greater than 4 nm and equal to or smaller than 20 nm. When the shape of the metal particles 20 is a columnar shape with the height direction as a center axis, the size (the diameter of the bottom surface of the column) in the first direction of the metal particles 20 is equal to or greater than 10 nm and equal to or smaller than 200 nm, preferably, equal to or greater than 20 nm and equal to or smaller than 150 nm, more preferably, equal to or greater than 25 nm and equal to or smaller than 100 nm, and still more preferably, equal to or greater than 30 nm and equal to or smaller than 72 nm.

Although the shape and material of the metal particles 20 are arbitrary insofar as the localized surface plasmon is generated by irradiation of incident light, the metal particles 20 are made of a metal in which there are an electric field given by incident light and an electric field such that a polarization induced by the electric field vibrates in an inverse phase, that is, a metal which can have a dielectric constant such that, if a specific electric field is given, a real part of a dielectric function has a negative value (has a negative dielectric constant), and a dielectric constant of an imaginary part is smaller than the absolute value of the dielectric constant of the real part. If the dielectric constant of the imaginary part comes close to zero, since a plasmon is infinite, it is preferable that the imaginary part is smaller. Examples of a material in which the localized surface plasmon is generated by light near visible light include gold, silver, aluminum, copper, an alloy thereof, and the like.

The metal particles 20 can be formed by, for example, a method which performs patterning after a thin film is formed by sputtering, vapor deposition, or the like, a microcontact print method, a nanoimprint method, or the like. The metal particles 20 may be formed by a colloid chemical method, and may be arranged at a position to be separated from the metal layer 10 by an appropriate method.

The metal particles 20 have a function of causing a localized surface plasmon to be generated in the optical element 100 of this embodiment. Incident light is irradiated onto the metal particles 20 under the following conditions, whereby the localized surface plasmon can be generated around the metal particles 20. The localized surface plasmon generated in the metal particles 20 can interact (hybrid) with the propagated surface plasmon generated in the metal layer 10 under certain conditions.

1.1.3. Arrangement of Metal Particles

As shown in Figs. 2 to 6, a plurality of metal particles 20 are arranged to constitute metal particle columns 21. The metal particles 20 are arranged in the first direction orthogonal to the thickness direction of the metal layer 10 in the metal particle columns 21. In other words, the metal particle columns 21 have a structure in which a plurality of metal particles 20 are arranged in the first direction orthogonal to the height direction. If the metal particles 20 have a longitudinal shape (an anisotropic shape), the first direction in which the metal particles 20 are arranged may not coincide with the longitudinal direction. The number of metal particles 20 which are arranged in one metal particle column 21 may be plural, and preferably, is equal to or greater than 10.

The interval of the metal particles 20 in the first direction in the metal particle columns 21 is defined as an interval P1 (see Figs. 3, 5, and 6). The interval P1 indicates the inter-center distance (pitch) of two metal particles 20 in the first direction. If the metal particles 20 have a columnar shape with the thickness direction of the metal layer 10 as a center axis, the inter-particle distance of two metal particles 20 in the metal particle columns 21 is equal to a length obtained by subtracting the diameter of the column from the interval P1. If the inter-particle distance is small, there is a tendency that the effect of the localized surface plasmon acting between the particles increases, and an enhancement degree increases. The inter-particle distance may be equal to or greater than 5 nm and equal to or smaller than 1 $\mu$m, preferably, equal to or greater than 5 nm and equal to or smaller than 100 nm, and more preferably, equal to or greater than 5 nm and equal to or smaller than 30 nm.

The interval P1 of the metal particles 20 in the first direction in the metal particle columns 21 is equal to or greater than 10 nm and equal to or smaller than 1 $\mu$m, preferably, equal to or greater than 20 nm and equal to or smaller than 800 nm, more preferably, equal to or greater than 30 nm and equal to or smaller than 780 nm, and still more preferably, equal to or greater than 50 nm and equal to or smaller than 700 nm.

Although the metal particle columns 21 are constituted by a plurality of metal particles 20 arranged at the interval P1 in the first direction, the distribution, intensity, and the like of the localized surface plasmon generated in the metal particles 20 also depend on the arrangement of the metal particles 20. Accordingly, the localized surface plasmon which interacts with the propagated surface plasmon generated in the metal layer 10 is a localized surface plasmon taking into consideration the arrangement of the metal particles 20 in the metal particle columns 21 and the thickness of the light transmitting layer 30, as well as a localized surface plasmon generated in the single metal particle 20.

As shown in Figs. 2 to 6, the metal particle columns 21 are arranged at an interval P2 in a second direction intersecting the thickness direction of the metal layer 10 and the first direction. The number of metal particle columns 21 arranged may be plural, and preferably, is equal to or greater than 10.

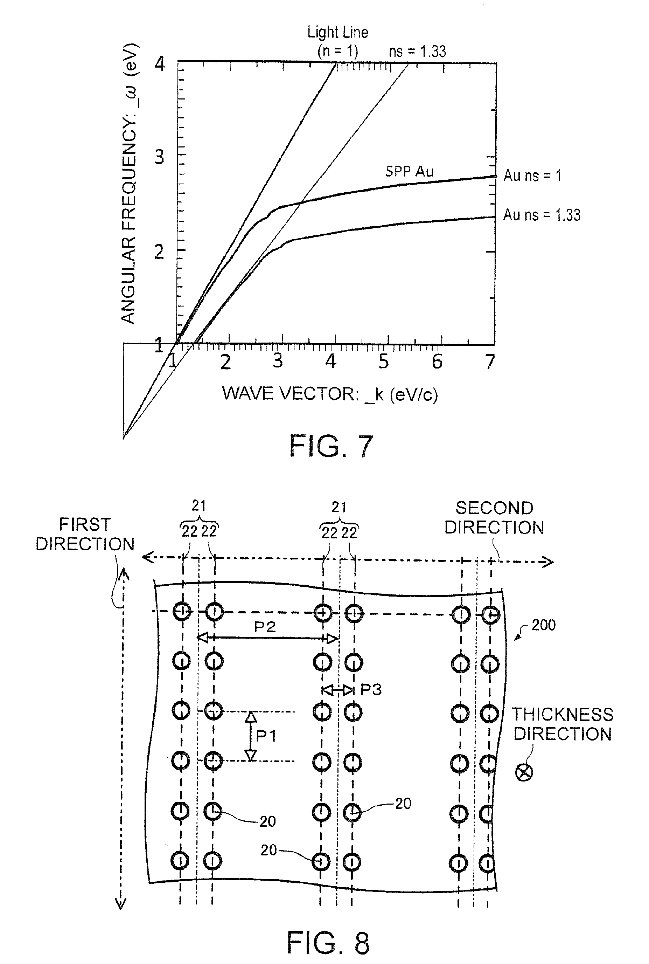

Here, the interval of adjacent metal particle columns 21 in the second direction is defined as the interval P2. The interval P2 indicates the inter-center distance (pitch) of two metal particle columns 21 in the second direction. If the metal particle columns 21 are constituted by a plurality of columns 22, the interval P2 indicates the distance between the position of a center of a plurality of columns 22 in the second direction and the position of a center of a plurality of columns 22 of an adjacent metal particle column 21 in the second direction (see Fig. 8).

The interval P2 between the metal particle columns 21 is greater than the interval P1 between the metal particles 20. That is, the interval P1 and the interval P2 have the relationship of Expression (1).

$$P1 < P2 \ ... \ (1)$$

The relationship of Expression (1) is established, whereby the arrangement of the metal particles 20 in the optical element 100 has anisotropy when viewed from the thickness direction of the light transmitting layer 30. The interval P2 between the metal particle columns 21 is, for example, equal to or greater than 10 nm and equal to or smaller than 10 $\mu$m, preferably, equal to or greater than 20 nm and equal to or smaller than 2 $\mu$m, more preferably, equal to or greater than 30 nm and equal to or smaller than 1500 nm, still more preferably, equal to or greater than 60 nm and equal to or smaller than 1310 nm, and particularly preferably, equal to or greater than 60 nm and equal to or smaller than 660 nm.

The interval P2 between the metal particle columns 21 may be set under conditions described in "1.1.3.1. Propagated Surface Plasmon and Localized Surface Plasmon", and in this case, the enhancement degree of light may further increase.

The angle between a line in the first direction in which the metal particle columns 21 extend and a line which connects two closest metal particles 20 respectively belonging to adjacent metal particle columns 21 is not particularly limited, and may be a right angle. For example, as shown in Fig. 3, the angle between both lines may be a right angle, or as shown in Fig. 6, the angle between both lines may not be a right angle. That is, if the arrangement of the metal particles 20 when viewed from the thickness direction is regarded as a two-dimensional lattice with the positions of the metal particles 20 as lattice points, an irreducible fundamental unit lattice may have a rectangular shape or a parallelogram shape. If the angle between the line in the first direction in which the metal particle columns 21 extend and the line which connects two closest metal particles 20 respectively belonging to adjacent metal particle columns 21 is not a right angle, the interval between two closest metal particles 20 respectively belonging to adjacent metal particle columns 21 may be defined as the interval P2.

1.1.3.1. Propagated Surface Plasmon and Localized Surface Plasmon

First, the propagated surface plasmon will be described. Fig. 7 is a graph of a dispersion relation representing dispersion curves of incident light and gold. Usually, even if light is irradiated onto the metal layer 10 at an incidence

angle (irradiation angle $\theta$) of 0 to 90 degrees, the propagated surface plasmon is not generated. For example, this is because, if the metal layer 10 is made of Au, and the refractive index around the metal layer 10 is n = 1, as shown in Fig. 7, a light line and a dispersion curve of SPP of Au have no intersection point. Even if the refractive index of a medium through which light passes changes, since SPP of Au changes depending on an ambient refractive index, there is no intersection point. In order to cause the propagated surface plasmon with an intersection point to be generated, there is a method in which a metal layer is provided on a prism like the Kretschmann arrangement, and the wavenumber of incident light increases with the refractive index of the prism, or a method in which the wavenumber of a light line increases with a diffraction grating. Fig. 7 is a graph showing a so-called dispersion relation (the vertical axis is an angular frequency [$\omega$ (eV)], and the horizontal axis is a wave vector [k (eV / c)]).

The angular frequency $\omega$ (eV) on the vertical axis of the graph of Fig. 7 has a relationship of $\lambda$ (nm) = 1240 / $\omega$ (eV), and can be converted to wavelength. The wave vector k (eV / c) on the horizontal axis of the graph has a relationship of k (eV / c) = $2\pi \cdot 2 / [\lambda(nm)/100]$. Accordingly, for example, if $\lambda$ = 600 nm, k = 2.09 (eV / c).

Although Fig. 7 shows the dispersion curve of SPP of Au, in general, when the angular frequency of incident light incident on the metal layer 10 is $\omega$, light speed in a vacuum is c, the dielectric constant of a metal constituting the metal layer 10 is $\varepsilon(\omega)$, and an ambient dielectric constant is $\varepsilon$, the dispersion curve of SPP of the metal is given by Expression (4).

$$K_{SPP} = \omega \ / \ c \ [\varepsilon \cdot \varepsilon(\omega) \ / \ (\varepsilon + \varepsilon(\omega))]^{1/2} \ \ldots \ (4)$$

When the irradiation angle of incident light, that is, the inclination angle from the first direction is $\theta$, the wavenumber K of incident light which passes through diffraction gratings having a grating interval Q can be expressed by Expression (5).

$$K = n \cdot (\omega \ / \ c) \cdot \sin\theta + m \cdot 2\pi \ / \ Q \ (m = \pm1, \ \pm2, \ \ldots) \ \ldots \ (5)$$

This relationship appears as a line, instead of a curve, on the graph of the dispersion relation.

Note that n is an ambient refractive index, when an extinction coefficient is $\kappa$, a real part $\varepsilon'$ and an imaginary part $\varepsilon''$ of a relative dielectric constant $\varepsilon$ at a frequency of light are respectively given by $\varepsilon' = n^2 - \kappa^2$ and $\varepsilon'' = 2n\kappa$, and if an ambient medium is transparent, since $\kappa \sim 0$, $\varepsilon$ is a real number, becomes $\varepsilon = n^2$, and is given by $n = \varepsilon^{1/2}$.

In the graph of the dispersion relation, if the dispersion curve (Expression (4)) of SPP of the metal and the line (Expression (5)) of the light line of diffracted light have an intersection point, the propagated surface plasmon is excited. That is, if the relationship of $K_{SPP}$ = K is established, the propagated surface plasmon is excited in the metal layer 10.

Accordingly, Expression (3) is obtained from Expression (4) and Expression (5).

$$(\omega \ / \ c) \cdot \{\varepsilon \cdot \varepsilon(\omega) \ / \ (\varepsilon + \varepsilon(\omega))\}^{1/2} = \varepsilon^{1/2} \cdot \sin\theta + 2m\pi \ / \ Q \ (m$$

$$= \pm1, \ \pm2, \ \ldots) \ \ldots \ (3)$$

It is understood that, if the relationship of Expression (3) is satisfied, the propagated surface plasmon is excited in the metal layer 10. In this case, in the example of SPP of Au of Fig. 7, change in $\theta$ and m can cause change in the slope and/or slice of the light line, and it is possible to cause the line of diffracted light to intersect the dispersion curve of SPP of Au.

Next, the localized surface plasmon will be described.

The condition for causing the localized surface plasmon to be generated in the metal particles 20 is given by the following expression using a real part of a dielectric constant.

$$\text{Real} \ [\varepsilon(\omega)] = -2\varepsilon \ \ldots \ (6)$$

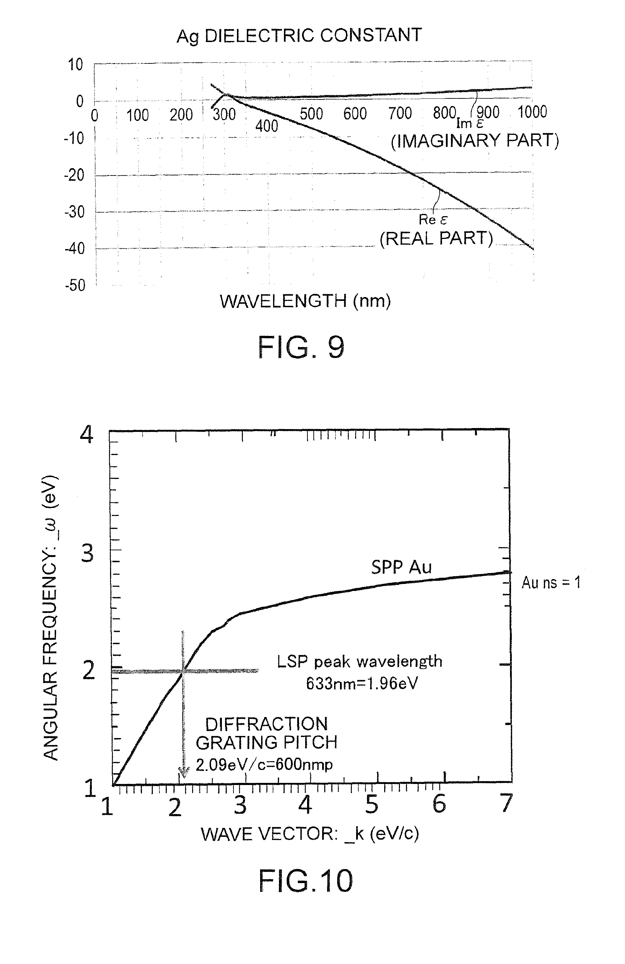

If the ambient refractive index n is 1, since $\varepsilon = n^2 - K^2 = 1$, Real $[\varepsilon(\omega)]$ = -2. For example, although the dielectric constant of Ag is as shown in Fig. 9, and the localized surface plasmon is excited at a wavelength of 370 nm in a single particle, if a plurality of Ag particles are close to each other in a nano order or if the Ag particles and the metal layer 10 (Au film or the like) are arranged to be separated by the light transmitting layer 30 ($SiO_2$ or the like), the peak wavelength of the localized surface plasmon is red-shifted (shifted to a long wavelength side) by the effect of the gap. Although the shift amount depends on dimension, such as Ag diameter, Ag thickness, Ag particle interval, or light transmitting layer thickness, for example, a wavelength characteristic that the localized surface plasmon has a peak at 500 nm to 1200 nm is exhibited.

Unlike the propagated surface plasmon, the localized surface plasmon is plasmon which has no speed and does not move, and if the localized surface plasmon is plotted in the graph of the dispersion relation, the slope is zero, that is, $\omega/k = 0$.

The optical element 100 of this embodiment electromagnetically couples the propagated surface plasmon and the localized surface plasmon, thereby obtaining an extremely large enhancement degree of an electric field. That is, the optical element 100 of this embodiment has a feature that the intersection point of the line of diffracted light and the dispersion curve of SPP of the metal in the graph of the dispersion relation is not set to an arbitrary point, and both intersect near a point at which the greatest or maximum enhancement degree is given in the localized surface plasmon generated in the metal particles 20 (metal particle columns 21) (see Fig. 10).

In other words, in the optical element 100 of this embodiment, it may be designed such that, in the graph of the dispersion relation, the line of diffracted light passes near the intersection point of the dispersion curve of SPP of the metal and the angular frequency (a line parallel to the horizontal axis marked with LSP on the graph of the dispersion relation of Fig. 10) of incident light giving the greatest or maximum enhancement degree in the localized surface plasmon generated in the metal particles 20 (metal particle columns 21).

Here, if converted to wavelength, near the intersection point refers to within the range of a wavelength having a length of about ±10% of the wavelength of incident light, or within the range of a wavelength having a length of about ±P1 (the interval of the metal particles 20 in the metal particle columns 21) of the wavelength of incident light.

In Expressions (4), (5), and (3), although the condition that the propagated surface plasmon is excited when the angular frequency of incident light incident on the metal layer 10 is $\omega$ has been described, in order to cause interaction (hybrid) of the localized surface plasmon and the propagated surface plasmon, in the optical element 100 of this embodiment, $\omega$ in Expressions (4), (5), and (3) becomes the angular frequency of incident light giving the greatest or maximum enhancement degree in the localized surface plasmon generated in the metal particles 20 (metal particle columns 21).

Accordingly, when the angular frequency of the localized surface plasmon which is excited in the metal particle columns 21 is $\omega$, if Expression (3) is satisfied, it is possible to cause a hybrid of the localized surface plasmon and the propagated surface plasmon.

Accordingly, when the angular frequency of the localized surface plasmon generated in the metal particle column 21 having the metal particles 20 arranged at the interval P1 is $\omega$, if the line of diffracted light (order m) which is incident on the virtual diffraction gratings having the grating interval Q at the inclination angle $\theta$ and is diffracted passes near the position of $\omega$ of the dispersion curve of SPP of the metal in the graph of the dispersion relation (if Expression (3) is satisfied), it is possible to cause a hybrid of the localized surface plasmon and the propagated surface plasmon, and to obtain an extremely large enhancement degree. In other words, in the graph of the dispersion relation shown in Fig. 10, the slope and/or slice of the light line changes to change the light line so as to pass near the intersection point of SPP and LSP, whereby it is possible to cause a hybrid of the localized surface plasmon and the propagated surface plasmon, and to obtain an extremely large enhancement degree. Fig. 10 shows an example where the ambient refractive index n = 1, and when excitation light is vertically incident on the Au film, the diffraction grating pitch by the metal particles 20 is arranged at 600 nm. It is understood that an intersection point of SPP and a vertical light line and an LSP peak wavelength intersect at one point. This condition is an example which shows a hybrid enhancement effect.

1.1.3.2. Interval

The interval P2 between two metal particle columns 21 is arbitrary insofar as the relationship of P1 < P2 (Expression (1)) is satisfied, and may be set as follows. When vertical incidence (incidence angle $\theta$ = 0) and first-order diffracted light (m = 1) is used, if the interval P2 is set as the grating interval Q, Expression (3) can be satisfied. However, the grating interval Q at which Expression (3) can be satisfied by the incidence angle $\theta$ and the order m of diffracted light to be selected has a width. Although it is preferable that the incidence angle $\theta$ in this case is the inclination angle from the thickness direction of the light transmitting layer 30 to the second direction, the incidence angle may be the inclination angle in a direction including the component of the first direction.

Accordingly, the range of the interval P2 which can cause a hybrid of the localized surface plasmon and the propagated surface plasmon is given by Expression (7) taking into consideration the presence near the intersection point (the width of ±P1).

$$Q - P1 \leq P2 \leq Q + P1 \ ... \ (7)$$

When near the intersection point is expressed with a wavelength (the width of $\pm 10\%$ of the wavelength), if the unit of $\omega$ is eV, the following expression is obtained.

$$Q - \lambda / 10 \leq P2 \leq Q + \lambda / 10$$

Since $\lambda$ (nm) = 1240 / $\omega$, the following expression is obtained.

$$Q - 124 / \omega \leq P2 \leq Q + 124 / \omega \ ... \ (8)$$

[$\omega$ represents the angular frequency of incident light giving the greatest or maximum enhancement degree in the localized surface plasmon generated in the metal particle columns, and is expressed in units of eV.]

Although the interval P2 is the interval between the metal particle columns 21 in the second direction, in regard to the interval between two metal particles 20 belonging to adjacent metal particle columns 21, the line which connects these metal particles 20 can be inclined with respect to the second direction by a method of selecting two metal particles 20. That is, two metal particles 20 belonging to adjacent metal particle columns 21 can be selected so as to have an interval longer than the interval P2. In Fig. 3, an auxiliary line for describing this is drawn, and two metal particles 20 which are separated at a distance longer than the interval P2 in a direction inclined with respect to the second direction can be selected from adjacent metal particle columns 21. As described above, since adjacent metal particle columns 21 are the same metal particle column 21, the arrangement of the metal particles 20 when viewed from the thickness direction of the light transmitting layer 30 may be regarded as a two-dimensional lattice with the positions of the metal particles 20 as lattice points. Then, in the two-dimensional lattice, there is a grating interval (diffraction grating) longer than the interval P2.

Accordingly, in the matrix of the metal particles 20 arranged at the interval P1 and the interval P2, diffracted light by diffraction gratings having a grating interval greater than the interval P2 can be expected. For this reason, an inequality expression on the left side of Expression (7) and Expression (8) can be defined as P1 < P2 (Expression (1)). In other words, in Expression (7) and Expression (8), even if the interval P2 is smaller than Q - P1, since there may be diffraction gratings having the grating interval Q at which Expression (3) can be satisfied, it is possible to cause a hybrid of the localized surface plasmon and the propagated surface plasmon. Therefore, the interval P2 may be a value smaller than Q - P1, and it should suffice that the relationship of P1 < P2 is satisfied.

From above, if the interval P2 between the metal particle columns 21 in the optical element 100 of this embodiment satisfies the relationship of Expression (2) and Expression (9), it is possible to cause a hybrid of the localized surface plasmon and the propagated surface plasmon.

$$P1 < P2 \leq Q + P1 \ ... \ (2)$$

$$P1 < P2 \leq Q + 124 / \omega \ ... \ (9)$$

[$\omega$ represents the angular frequency of incident light giving the greatest or maximum enhancement degree in the localized surface plasmon generated in the metal particle columns, and is expressed in units of eV.]

The interval P2 in this range is set, whereby the enhancement degree of light may further increase.

1.1.4. Light Transmitting Layer

The optical element 100 of this embodiment has the light transmitting layer 30 which separates the metal layer 10 from the metal particles 20. In Figs. 2, 4, and 5, the light transmitting layer 30 is drawn. The light transmitting layer 30 may have a shape of a film, a layer, or a membrane. The light transmitting layer 30 is provided on the metal layer 10. Accordingly, it is possible to separate the metal layer 10 from the metal particles 20.

The light transmitting layer 30 can be formed by, for example, a method, such as vapor deposition, sputtering, CVD, or various kinds of coating. The light transmitting layer 30 may be provided on the entire surface of the metal layer 10 or may be provided on a part of the surface of the metal layer 10. The thickness of the light transmitting layer 30 is not particularly limited insofar as the propagated surface plasmon of the metal layer 10 and the localized surface plasmon of the metal particles 20 can interact with each other, and can be, for example, equal to or greater than 1 nm and equal to or smaller than 1 $\mu$m, preferably, equal to or greater than 5 nm and equal to or smaller than 500 nm, more preferably, equal to or greater than 10 nm and equal to or smaller than 100 nm, still more preferably, equal to or greater than 15 nm and equal to or smaller than 80 nm, and particularly preferably, equal to or greater than 20 nm and equal to or smaller than 60 nm. Alternatively, a 2nd peak thickness using an interference effect may be used. When the excitation wavelength is $\lambda$, the thickness of the light transmitting layer 30 is d, an effective refractive index of a thin film of the material of the light transmitting layer 30 is $n_{eff}$, and j is an integer, the following expression is given.

$$d = j \cdot \lambda / (2 \cdot n_{eff})$$

Specifically, when a spacer material is $SiO_2$, the thickness may be equal to or greater than 200 nm and equal to or smaller than 300 nm.

The light transmitting layer 30 may have a positive dielectric constant, and may be formed of, for example, $SiO_2$, $Al_2O_3$, $TiO_2$, $Ta_2O_5$, $Si_3N_4$, a polymer, ITO (Indium Tin Oxide), or the like. The light transmitting layer 30 may be made of a dielectric. The light transmitting layer 30 may have a plurality of layers of different materials.

With the light transmitting layer 30, since there is a case where the excitation peak frequency of the localized surface plasmon generated in the metal particles 20 is shifted, it is necessary to take this into consideration in obtaining the peak excitation wavelength of the localized surface plasmon upon setting of the interval P2.

1.1.5. Other Configurations and Modification

1.1.5.1. Overlayer

The optical element 100 of this embodiment may have an overlayer as necessary. Though not shown, the overlayer may be formed so as to cover the metal particles 20. The overlayer may also be formed so as to expose the metal particles 20 and to cover other configurations.

For example, the overlayer has a function of mechanically and chemically protecting the metal particles 20 or other configurations from the environment. The overlayer may be formed by a method, for example, vapor deposition, sputtering, CVD, various kinds of coating, or the like. The thickness of the overlayer is not particularly limited. The material of the overlayer is not particularly limited, and the overlayer may be formed of, for example, a metal, such as ITO, Cu, or Al, a polymer, or the like, as well as an insulator, such as $SiO_2$, $Al_2O_3$, $TiO_2$, $Ta_2O_5$, or $Si_3N_4$. It is desirable that the thickness of the overlayer is thin and equal to or smaller than several nm.

If the overlayer is provided, similarly to the light transmitting layer 30, since there is a case where the excitation peak frequency of the localized surface plasmon generated in the metal particles 20 is shifted, it is necessary to take this into consideration in obtaining the peak excitation wavelength of the localized surface plasmon upon setting of the interval P2.

1.1.5.2. Modification

Fig. 8 is a schematic view when an optical element 200 according to a modification example is viewed from the first direction. The metal particle columns 21 may have a plurality of columns 22. The columns 22 have a plurality of metal particles 20 arranged at the interval P1 in the first direction, and are the same as the metal particle columns 21. Accordingly, all of a plurality of columns 22 are parallel to the first direction. As shown in Fig. 8, if the metal particle columns 21 are constituted by a plurality of columns 22, the interval P2 indicates the distance between the position of a center of a plurality of columns 22 in the second direction and the position of a center of a plurality of columns 22 of an adjacent metal particle column 21 in the second direction. Although Fig. 8 shows a case of two columns, the number of columns may increase to three columns, four columns, or the like. As the number of columns 22 increases, while the enhancement degree decreases, since hot spot density increases, a Raman scattering enhancement effect may increase. The angle between a line in the first direction which connects two adj acent metal particles 20 of the same column 22 and a line which connects the closest metal particles 20 among the metal particles 20 belonging to adjacent columns 22 is not particularly limited, and may or may not be a right angle. In the example shown in the drawing, a case where the angle between the both lines is a right angle is described. The interval between adjacent columns 22 is defined as an interval P3 (see Fig. 8). The interval P3 indicates the inter-center distance (pitch) of two columns 22 in the second direction.

Even if the metal particle columns 21 are constituted by a plurality of columns 22, the interval P2 is set such that the conditions of Expression (2) and Expression (9) are satisfied, whereby the enhancement degree of light and hot spot density (HSD) may further increase.

1.2. Light Source

The analysis device 1000 of this embodiment includes the light source 300. The light source 300 irradiates incident light onto the optical element 100. The light source 300 can irradiate linearly polarized light (linearly polarized light in the same direction as the first direction) in the first direction (the direction in which the metal particles 20 are arranged and the direction in which the metal particle columns 21 extend) of the optical element 100 and linearly polarized light (linearly polarized light in the same direction as the second direction) in the second direction (the direction in which the metal particle columns 21 are arranged and the direction intersecting the metal particle columns 21) of the optical element 100, or circularly polarized light.

That is, the light source 300 may have a form in which linearly polarized light in the same direction as the first direction and linearly polarized light in the same direction as the second direction are irradiated onto the optical element 100, or a form in which circularly polarized light is irradiated onto the optical element 100. The inclination angle $\theta$ of incident light irradiated from light source 300 in the thickness direction of the light transmitting layer 30 may appropriately change in accordance with the excitation conditions of the surface plasmon of the optical element 100. The light source 300 may be installed in a goniometer or the like.

Light irradiated from the light source 300 is not particularly limited insofar as the surface plasmon of the optical element 100 can be excited, and electromagnetic waves including ultraviolet light, visible light, and infrared light may be used. Light irradiated from the light source 300 may or may not be coherent light. Specifically, as the light source 300, a light source in which a wavelength selection element, a filter, a polarizer, and the like are appropriately provided in a semiconductor laser, a gas laser, a halogen lamp, a high-pressure mercury lamp, a xenon lamp, or the like may be used.

When a polarizer is used, a known polarizer may be used, and a mechanism which appropriately rotates a polarizer may be provided. Light from the light source 300 becomes excitation light, concentration of an electric field by the plasmon generated in the optical element 100, called a hot spot, occurs, and weak Raman light of a substance stuck to the hot spot is enhanced by the electric field of the hot spot, thereby performing detection of the substance.

1.3. Detector

The analysis device 1000 of this embodiment includes the detector 400. The detector 400 detects light emitted from the optical element 100. As the detector 400, for example, a CCD (Charge Coupled Device), a photomultiplier tube, a photodiode, an imaging plate, or the like may be used.

It should suffice that the detector 400 is provided at a position at which light emitted from the optical element 100 can be detected, and the positional relationship with the light source 300 is not particularly limited. The detector 400 may be installed in a goniometer or the like.

1.4. Incident Light

In the analysis device 1000 of this embodiment, incident light incident on the optical element 100 is, for example, excitation light for Raman spectroscopy. The wavelength of incident light incident on the optical element 100 is not limited, and electromagnetic waves including ultraviolet light, visible light, and infrared light may be used. If the wavelength of incident light is selected such that the localized surface plasmon can be generated and the relationship of Expression (3) can be satisfied, it is possible to obtain a higher enhancement degree.

In this embodiment, incident light is a combination of linearly polarized light in the same direction as the first direction of the optical element 100 and linearly polarized light in the same direction as the second direction, or circularly polarized light. Such light is incident on the optical element 100, whereby it is possible to enhance light in a wide band.

1.5. Enhancement Degree Profile

The enhancement degree profile in the optical element 100 of this embodiment will be described.

The Raman enhancement degree is proportional to $C_{ext}$ (Extinction cross section) as described in OPTIC EXPRESS Vol. 19, No. 16 (2011), 14919 - 14928.

According to OPTIC EXPRESS Vol. 19, No. 16 (2011), 14919 - 14928, Raman intensity is proportional to the value of Expression (X).

$$C_{ext} = (1 - R) \cdot \Lambda_x \cdot \Lambda_y \ldots (X)$$

Here, R is reflectance, and $\Lambda_x$ and $\Lambda_y$ are the period of metal nanoparticles on the X axis and the Y axis.

The wavelength dependence of the enhancement degree can be obtained from the wavelength dependence of reflectance.

The enhancement degree of Raman scattering light is proportional to ECS (Extinction Cross Section). Accordingly, the wavelength dependence of ECS (in this specification, this is referred to as "enhancement degree profile".) is obtained, whereby it is possible to find out the wavelength dependence of the enhancement degree.

Raman intensity is proportional to $C_{ext}$ (Expression (X)), and if expressed using the interval P1 and the interval P2 in the optical element 100 of this embodiment, since $C_{ext}$ = ECS, $\Lambda_x$ = P1, $\Lambda_y$ = P2, Raman intensity is proportional to Expression (Y), and can be obtained by Expression (Y).

$$ECS = (1 - R) \cdot P1 \cdot P2 \ldots (Y)$$

If two dipoles (dipole a and dipole b) are at positions with distance r, energy U by the dipole-dipole interaction of a dipole vector $P^*_a$ and a dipole vector $P^*_b$ is expressed by Expression (10) when r is written by r* as a vector (in this specification, "*" is used as a symbol which expresses a vector.).

$$U = (1 / 4\pi\varepsilon_0)(1 / r^3) \ [P^*_a \cdot P^*_b - 3(P_a \cdot r^*)(P_b \cdot r^*)] \ \ldots (10)$$

In the structure of this embodiment, since r* is the thickness direction of the light transmitting layer 30, and $P^*_a$ and $P^*_b$ are respectively the first direction and the second direction, $P^*_a$ and r*, and $P^*_b$ and r* have a vertical relationship, and the second term on the right side of Expression (10) becomes zero.

Accordingly, energy U by dipole-dipole interaction is proportional to $P^*_a \cdot P^*_b$.

Here, if $P^*_a$ of Expression (10) is substituted with LSP* and $P^*_b$ is substituted with PSP*, when LSP* and PSP* are orthogonal to each other, energy U is proportional to zero (the inner product of PSP* and LSP*), and even if the direction of the vector LSP* is inverted, energy U is similarly proportional to zero. That is, when LSP* and PSP* are orthogonal to each other, an energy potential is degenerated and one energy potential is taken.

Meanwhile, when the vector PSP* of PSP and the vector LSP* of LSP are parallel to each other, from Expression (10), there are a case where energy U is proportional to the inner product of PSP* and LSP*, and a case where the direction of the vector LSP* is inverted, and energy U is proportional to the inner product of PSP* and -LSP*. That is, when LSP* and PSP* are parallel to each other, the energy potential is not degenerated, and two energy potentials are taken.

Accordingly, when the polarization direction of excitation light makes LSP* and PSP* parallel to each other, so-called anticrossing behavior occurs, and two peaks occur in the wavelength dependence of the enhancement degree. Though described in the following experimental examples, when two peak wavelengths come close to each other, the peaks are not separated and may be observed as one peak.

In contrast, when the polarization direction of excitation light makes LSP* and PSP* orthogonal to each other, so-called anticrossing behavior does not occur, and one peak occurs in the wavelength dependence of the enhancement degree.

1.6. Design for Enhancement Degree Profile

In the analysis device 1000 of this embodiment, when the optical element 100 is used to enhance Raman scattering light, it is preferable that the arrangement of the metal particles 20 of the optical element 100 is set as follows taking into consideration at least the above-described matters.

In general, the wavelength or wavenumber of Raman scattering light extends over a wide band. When only excitation light of linearly polarized light in a specific direction is given to the optical element 100, there are many cases where it is not possible to cover the entire wide band so as to have a high enhancement degree. In this case, for example, even if the integration time is extended, in an uncovered band, it is not possible to obtain a high enhancement degree.

In the optical element 100 of this embodiment, when only incident light of linearly polarized light in the same direction as the first direction is incident, even if a high enhancement degree is obtained, since the enhancement degree profile has one peak, it is difficult to enhance the entire band of Raman scattering light. However, incident light of linearly polarized light in the same direction as the second direction is further incident on the optical element 100 of this embodiment. In a case of incident light of linearly polarized light in the same direction as the second direction, while the enhancement degree is not large compared to incident light of linearly polarized light in the same direction as the first direction, since the enhancement degree profile has two peaks, it is possible to expand a band in which a given enhancement degree is obtained.

In the analysis device 1000 of this embodiment, two enhancement degree profiles by linearly polarized light in the same directions as the first direction and the second direction are superimposed, whereby it is possible to obtain a sufficiently high enhancement degree in a wide band. These two enhancement degree profiles can be adjusted by the arrangement and material of the metal particles 20, the thickness and material of the metal layer 10, and the like in the optical element 100.

Similarly, in the optical element 100 of this embodiment, circularly polarized incident light is incident. Since incident light of circularly polarized light includes a polarization component along the first direction and a polarization component along the second direction, superimposition of enhancement degree profiles occurs, and it is possible to obtain a sufficiently high enhancement degree in a wide band.

Accordingly, in the optical element 100 of this embodiment, it is possible to design an enhancement degree profile as follows.

For example, when the analysis device 1000 of this embodiment is used to detect a known substance, superimposition of two enhancement degree profiles by linearly polarized light in the first direction and the second direction of the optical element 100 is set so as to become larger in a region of the wavelength or wavenumber of Raman scattering light of the substance. With this, it is possible to perform detection of the substance with high sensitivity.

For example, when the analysis device 1000 of this embodiment is used to detect and identify an unknown substance, superimposition of two enhancement degree profiles by linearly polarized light in the first direction and the second direction of the optical element 100 is set so as to become larger in as a wide band as possible. With this, it is possible to perform detection and identification of the substance with high sensitivity.

According to the analysis device 1000 described above, since a wide and large enhancement degree profile of light based on a plasmon of the optical element is taken, it is possible to easily perform detection and measurement of a wide range of trace substances. The analysis device 1000 of this embodiment may include other appropriate configurations (not shown), such as a housing, input/output means, and the like.

The analysis device 1000 of this embodiment has the following features.

In the analysis device 1000 of this embodiment, since linearly polarized light in the same direction as the first direction and linearly polarized light in the same direction as the second direction, or circularly polarized light is irradiated onto the optical element 100, it is possible to enhance light in a wide band.

Since the analysis device 1000 of this embodiment has a high enhancement degree, for example, the analysis device 1000 of this embodiment can be used in a sensor which quickly and simply detects bio-related materials, such as bacteria, viruses, protein, nucleic acids, or various antigens/antibodies, or various compounds including inorganic molecules, organic molecules, and polymers with high sensitivity and high precision in the field of medicine and health, environment, food, public safety, and the like. The enhancement degree of light of the analysis device 1000 of this embodiment can be used to enhance Raman scattering light of trace substances.

2. Method of Designing Optical Element

Although the optical element 100 of this embodiment has the above-described structure, and can function fully if the relationship of P1 < P2 (Expression (1)) is established, an example of a design method for an optical element having a large enhancement degree will be specifically described below.

First, an optical element is designed including selecting the interval P2 such that the light line of diffracted light generated by the diffraction grating of the metal particle column 21 intersects near the intersection point of the dispersion curve of the metal constituting the metal layer 10 and the angular frequency [$\omega$ (eV)] of light giving the peak of the localized surface plasmon excited in the metal particles 20 (metal particle columns 21) arranged at the interval P1 in the graph (the vertical axis is an angular frequency [$\omega$ (eV)] and the horizontal axis is a wave vector [k (eV / c)]) of the dispersion relation (see Fig. 10).

A method of designing the optical element of this embodiment includes the following process.

The excitation wavelength dependence of the localized surface plasmon in the metal particles 20 (metal particle columns 21) is examined, and the wavelength at which the greatest or maximum localized surface plasmon is generated in the metal particles 20 (in this specification, this is referred to as a peak wavelength) is recognized. As described above, although the localized surface plasmon changes depending on the material, shape, and the arrangement of the metal particles 20, the presence/absence of other configurations, or the like, the peak wavelength can be obtained by measurement or computation.

The dispersion curve of the metal constituting the metal layer 10 is recognized. This curve may be obtained from the literature or the like depending on the material of the metal layer 10, or may be obtained by computation. The slope of the light line or the SPP dispersion relation may also be obtained according to the ambient refractive index.

As necessary, the obtained peak excitation wavelength and the dispersion curve are plotted in the graph (the vertical axis is an angular frequency [$\omega$ (eV)] and the horizontal axis is a wave vector [k (eV / c)]) of the dispersion relation. At this time, the peak excitation wavelength of the localized surface plasmon becomes a line parallel to the horizontal axis on the graph. Since the localized surface plasmon is plasmon which has no speed and does not move, if the localized surface plasmon is plotted in the graph of the dispersion relation, the slope ($\omega$ / k) becomes zero.

The incidence angle $\theta$ of incident light and the order m of diffracted light to be used are determined, the value of Q is obtained from Expression (3), and the interval P2 is selected so as to satisfy the condition of Expression (2) or Expression (9). Then, the metal particle columns 21 are arranged.

If at least the above-described process is performed to set the interval P1 and the interval P2, since the interaction (hybrid) of LSP and PSP is enhanced, it is possible to obtain an optical element having a very large enhancement degree.

3. Analysis Method

An analysis method of this embodiment is performed using the above-described analysis device 1000. The analysis method of this embodiment irradiates light onto the above-described optical element 100 and detects light emitted from the optical element 100 by irradiation of light to analyze an object, in which the optical element 100 includes the metal layer 10, the light transmitting layer 30 provided on the metal layer 10 to transmit light, and a plurality of metal particles 20 arranged at a first interval in the first direction and at a second interval in the second direction intersecting the first direction on the light transmitting layer 30, the metal particles 20 of the optical element 100 are arranged so as to satisfy the relationship of Expression (1), and linearly polarized light in the same direction as the first direction and linearly polarized light in the same direction as the second direction are irradiated onto the optical element 100.

$$P1 < P2 \dots (1)$$

Here, P1 represents the first interval, and P2 represents the second interval.

4. Electronic Apparatus

An electronic apparatus 2000 of this embodiment includes the above-described analysis device 1000, a calculation unit 2010 which calculates health and medical information on the basis of detection information from the detector 400, a storage unit 2020 which stores the health and medical information, and a display unit 2030 which displays the health and medical information.

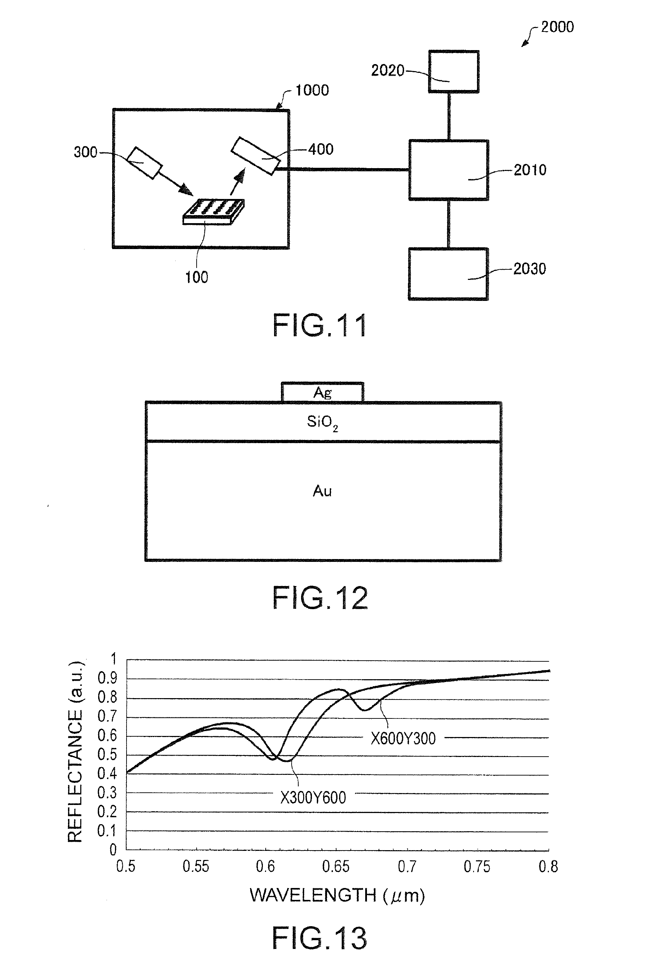

Fig. 11 is a schematic view showing the configuration of the electronic apparatus 2000 of this embodiment. The analysis device 1000 is the analysis device 1000 described in "1. Analysis Device", and detailed description will not be repeated.

The calculation unit 2010 is, for example, a personal computer or a personal digital assistance (PDA), receives the detection information (signal or the like) transmitted from the detector 400, and performs calculation based on the detection information. The calculation unit 2010 may control the analysis device 1000. For example, the calculation unit 2010 may control the output, position, or the like of the light source 300 of the analysis device 1000 or may control the position or the like of the detector 400. The calculation unit 2010 can calculate the health and medical information on the basis of the detection information from the detector 400. The health and medical information calculated by the calculation unit 2010 is stored in the storage unit 2020.

The storage unit 2020 is, for example, a semiconductor memory, a hard disk drive, or the like, and may be constituted integrally with the calculation unit 2010. The health and medical information stored in the storage unit 2020 is transmitted to the display unit 2030.

The display unit 2030 is constituted by, for example, a display board (liquid crystal monitor or the like), a printer, an illuminant, a speaker, or the like. The display unit 2030 performs display or gives an alarm on the basis of the health and medical information or the like calculated by the calculation unit 2010 such that the user can recognize the content.

The health and medical information may include information relating to the presence/absence or the amount of at least one bio-related material selected from a group consisting of bacteria, viruses, protein, nucleic acids, and antigens/antibodies or at least one compound selected from inorganic molecules and organic molecules.

5. Experimental Examples

Hereinafter, the invention will be further described in connection with experimental examples, but the invention is not limited to the following examples. The following examples are a simulation by a computer.

5.1. Computation Model

Fig. 12 is a schematic view showing the basic structure of a model for use in a simulation.

In all models used for computation in an experimental example, a light transmitting layer (SiO$_2$) film was formed on Au (metal layer) which was thick enough to prevent transmission of light. The thickness of the light transmitting layer was fixed to 20 nm. Metal particles arranged on the light transmitting layer were Ag, and were a column with the thickness direction of the light transmitting layer as a center axis, the size (the diameter of the bottom surface) of the column was 72 nm, and the height of the column was 20 nm. The wavelength of incident light was 600 nm or 633 nm.

FDTD soft Fullwave manufactured by Rsoft Inc. (current CYBERNET SYSTEMS CO. , LTD.) was used for computation. The condition of a used mesh was a 1 nm minimum mesh, and the computation time cT was 10 $\mu$m.

The ambient refractive index n was 1. Plots which were respectively computed when incident light was linearly polarized light in the same direction as the first direction and linearly polarized light in the same direction as the second direction with vertical incidence from the thickness direction (Z) of the light transmitting layer, or a plot which was computed when incident light was circularly polarized light with vertical incidence from the thickness direction (Z) of the light transmitting layer was obtained.

In a graph shown in respective experimental examples excluding Experimental Example 6, as a legend, for example, a notation such as "X120Y600" or "X600Y120", is used. Incident light of linearly polarized light in the X direction is used for computation, a profile marked with "X120Y600" is equivalent to the result by incident light of linearly polarized light in the "first direction" when the interval P1 is 120 nm and the interval P2 is 600 nm, and a profile marked with "X600Y120" is equivalent to the result by incident light of linearly polarized light in the "second direction" when the interval P1 is 120 nm and the interval P2 is 600 nm.

5.2. Experimental Example 1

Fig. 13 is a graph showing wavelength dependence of a reflectance characteristic. In a model used in this experimental example, the interval P1 and the interval P2 are respectively 300 nm and 600 nm. A case where linearly polarized light in the first direction was irradiated and a case where linearly polarized light in the second direction was irradiated were plotted.

As a result, a profile (X300Y600) of reflectance by linearly polarized light in the first direction was a shape having a minimum near 620 nm, and a profile (X600Y300) of reflectance by linearly polarized light in the second direction was a shape having two minimums near 610 nm and 670 nm.

Although it has been considered that this phenomenon results from that, since the interval P1 and the interval P2 are different in length from each other, and the arrangement of the metal particles (Ag particles) has anisotropy with respect to the first direction and the second direction, anisotropy is exhibited even in an optical characteristic (reflectance characteristic), close examination was performed as follows. The following is an experimental result.

As described above, it has been verified below that, if LSP$^*$ and PSP$^*$ have an orthogonal relationship, the minimum of reflectance becomes one peak, and if LSP$^*$ and PSP$^*$ have a parallel relationship, the minimum of reflectance becomes two peaks.

The inventors have carefully studied the reason for one peak and two peaks, and have confirmed that, while the localized surface plasmon LSP is excited in the polarization direction of excitation light, and the propagated surface plasmon PSP is not affected by the polarization direction of excitation light and runs in all directions on the surface of the metal layer 10. Since the PSP occurs in all directions, it was understood that a strong PSP was set in the arrangement direction of the metal particles 20 at a pitch satisfying Expression (3).

That is, in an X300Y600 model, when the vector of the LSP is written by LSP$^*$ and the vector of the PSP is written by PSP$^*$, it was understood that LSP$^*$ and PSP$^*$ had an orthogonal relationship. Referring to Fig. 3, if the excitation direction is the first direction, P1 = 300 nm, and P2 = 600 nm, LSP$^*$ was set in the first direction, and PSP$^*$ was set in the second direction. That is, LSP$^*$ and PSP$^*$ have an orthogonal relationship. From this, in the X300Y600 model, it was found that LSP$^*$ and PSP$^*$ had an orthogonal relationship, and as shown in Fig. 13, the minimum of reflectance became one peak.

In an X600Y300 model, it was found that LSP$^*$ and PSP$^*$ had a parallel relationship. Referring to Fig. 3, if the excitation direction is the second direction, P1 = 300 nm, and P2 = 600 nm, LSP$^*$ was set in the polarization direction of excitation light and thus became the second direction, and PSP$^*$ was set in the second direction satisfying Expression (3). That is, LSP$^*$ and PSP$^*$ have a parallel relationship. Accordingly, it was found that LSP$^*$ and PSP$^*$ had a parallel relationship, and as shown in Fig. 13, the minimum of reflectance became two peaks.

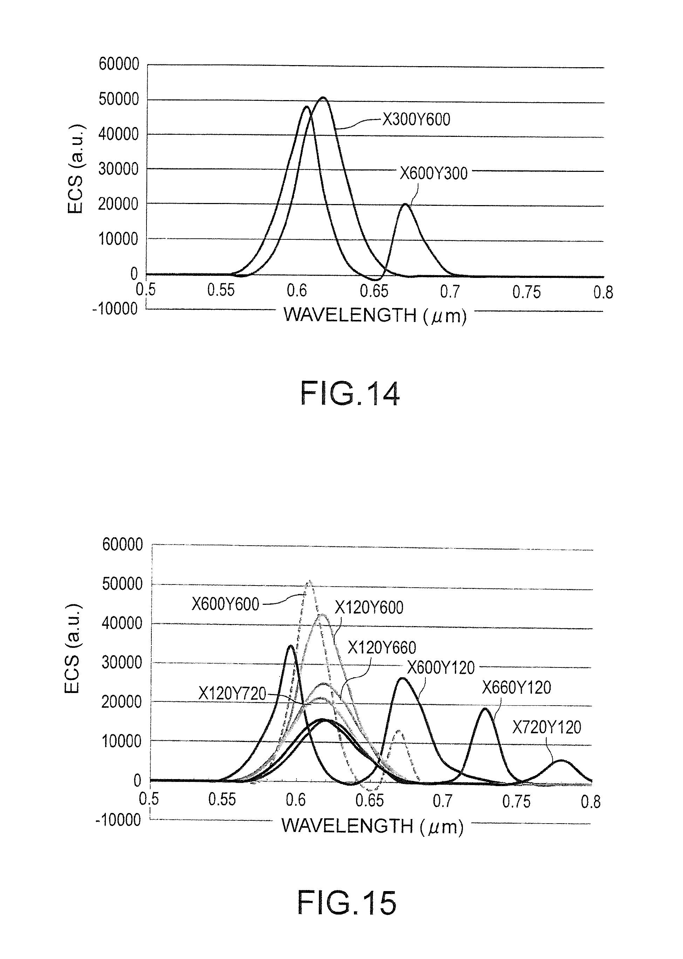

Fig. 14 is plotted while the vertical axis (reflectance) in the graph of Fig. 13 is converted to ECS (Extinction Cross Section). Though described above, Raman scattering light is largely amplified in a wavelength region having a large ECS value.

Referring to the graph of Fig. 14, if only light linearly polarized in the first direction is used, enhancement of Raman scattering light from near 570 nm to near 660 nm can be expected. Meanwhile, if light linearly polarized in the second direction is used as well, it is understood that, with the addition of two enhancement degree profiles, enhancement of Raman scattering light from near 550 nm to near 700 nm can be expected.

5.3. Experimental Example 2

Fig. 15 is a graph showing wavelength dependence of ECS. In a model used in this experimental example, the interval P1 and the interval P2 are combinations of 120 nm, 600 nm, 660 nm, and 720 nm. A case where light linearly polarized in the first direction was irradiated and a case where light linearly polarized in the second direction was irradiated were plotted. A plot indicated by a broken line in the drawing shows the result of a model with no anisotropy in which both the interval P1 and the interval P2 are 600 nm.

Referring to Fig. 15, it is understood that, in the ECSs of X120Y600 and X600Y120, while the peak value of ECS is small, a band having the ECS is expanded compared to the ECS of X600Y600. That is, if the interval P1 and the interval P2 are respectively set to 120 nm and 600 nm, it is understood that measurement is made two times while the polarization direction of incident light changes at 90 degrees between linear polarization in the first direction and linear polarization in the second direction, thereby obtaining a high enhancement degree in a wide band. In contrast, if both the interval P1 and the interval P2 are set to 600 nm, and there is no anisotropy, it can be understood that, even if the number of integrations of measurement increases (for example, measurement is made two or more times), a high enhancement degree is merely obtained in a comparatively narrow band.

From the graph of Fig. 15, if fixed to Y120, it is understood that, as the value of X becomes larger, the peak of the ECS on the long wavelength side is further shifted to the long wavelength side. That is, in a case of linear polarization in the second direction, it was found that, the interval P1 was fixed to 120 nm, and the interval P2 increased to 600 nm, 660 nm, and 720 nm, whereby a band in which an enhancement degree was obtained could be further shifted to the long wavelength side. Accordingly, if a band in which an enhancement degree is necessary is on the long wavelength side, it was found that the interval P2 changed, whereby the arrangement of the metal particles could be set such that the enhancement degree was obtained in this band.

5.4. Experimental Example 3

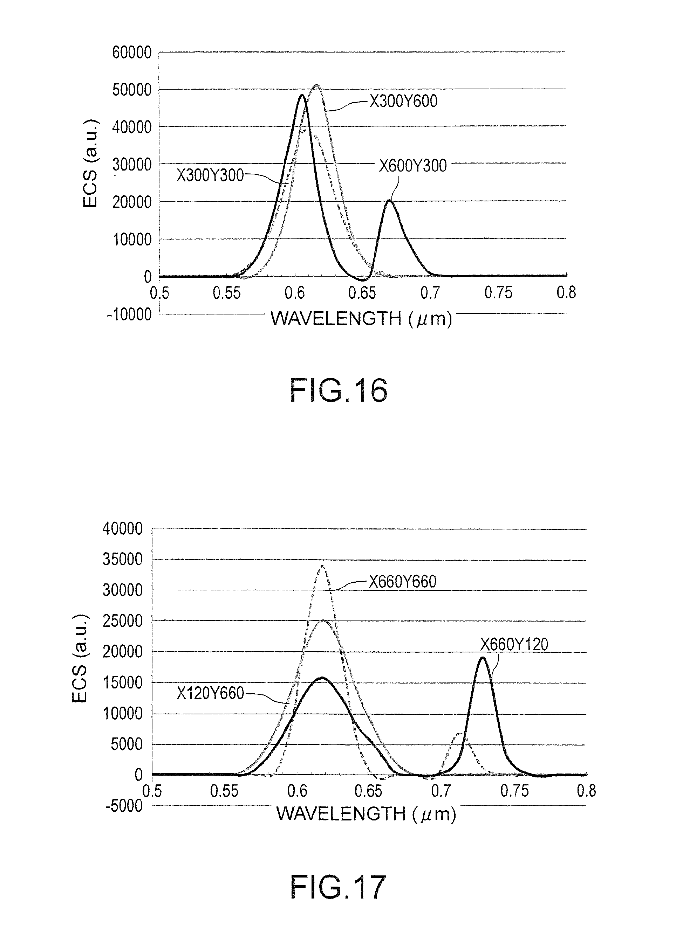

In this experimental example, as in Experimental Example 2, ECS behavior was examined for X300Y300, X300Y600, and X600Y300. Fig. 16 is a graph showing wavelength dependence of ECS. A plot indicated by a broken line in the drawing shows the result of a model with no anisotropy in which both the interval P1 and the interval P2 are 300 nm.

Referring to Fig. 16, it is understood that, in the ECSs of X300Y600 and X600Y300, the peak value of the ECS is large and a band having the ECS is expanded compared to the ECS of X300Y300. That is, if the interval P1 and the interval P2 are respectively set to 300 nm and 600 nm, as in Experimental Example 2, it was found that measurement was made two times while the polarization direction of incident light changed at 90 degrees between linearly polarized light in the first direction and linearly polarized light in the second direction, whereby a high enhancement degree could be obtained in a wide band.

5.5. Experimental Example 4

In this experimental example, as in Experimental Example 2, ECS behavior was examined for X660Y660, X660Y120, and X120Y660. Fig. 17 is a graph showing wavelength dependence of ECS. A plot indicated by a broken line in the drawing shows the result of a model with no anisotropy in which both the interval P1 and the interval P2 are 660 nm.

Referring to Fig. 17, it is understood that, in the ECSs of X120Y660 and X660Y120, while the peak value of the ECS is small, a band having the ECS is expanded compared to the ECS of X660Y660. That is, if the interval P1 and the interval P2 are respectively set to 120 nm and 660 nm, as in Experimental Example 2, it was found that measurement was made two times while the polarization direction of incident light changed at 90 degrees between linearly polarized light in the first direction and linearly polarized light in the second direction, whereby a high enhancement degree could be obtained in a wide band.

5.6. Experimental Example 5

In this experimental example, ECS behavior when the metal particle columns 21 had two columns 22 was examined. In this example, the metal particle columns 21 had two columns 22, and the angle between a line in the second direction which connects two adjacent metal particles 20 of the same column 22 and a line which connects the closest metal particles 20 among the metal particles 20 belonging to adjacent columns 22 was 90 degrees. The interval P3 between adjacent columns 22 was 120 nm.

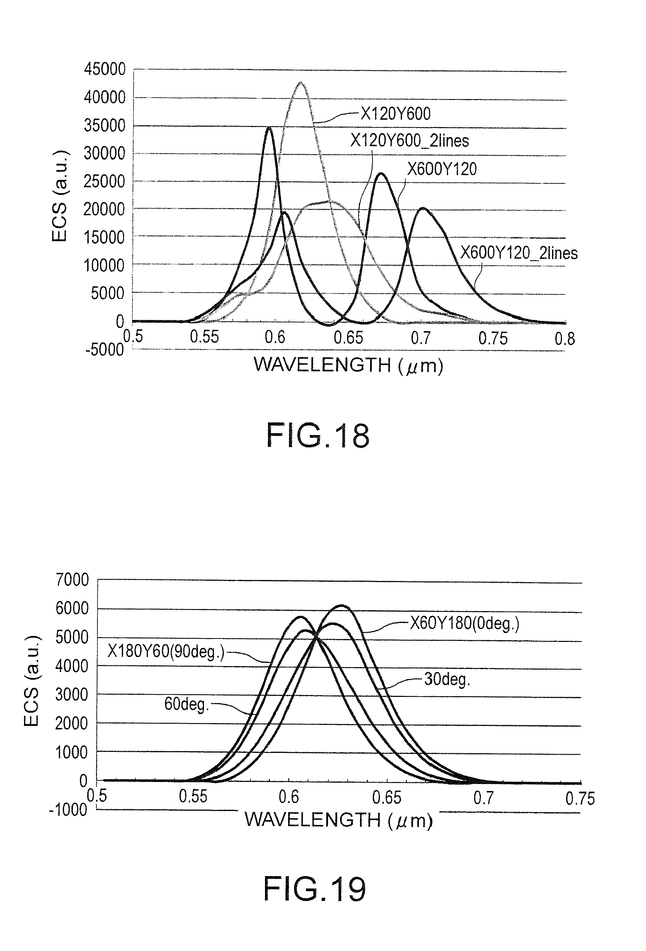

Fig. 18 is a graph showing wavelength dependence of ECS. The metal particle columns 21 having two columns 22 were marked with "2 lines" in the drawing. Referring to Fig. 18, even in a case of incident light of linearly polarized light in both the first direction and the second direction, if the metal particle columns 21 had two columns 22, it was found that a band having a large enhancement degree was expanded.

From Fig. 18, if the metal particle columns 21 had two columns 22, it was found that the maximum enhancement degree became smaller compared to a case where the metal particle columns 21 had one column. In the graph of Fig. 18, it is considered that this result is obtained with normalization by the area per unit number of particles. However, if the metal particle columns 21 have two columns 22, since density of the arrangement of the metal particles becomes two times a case where the metal particle columns 21 have one column, if an optical element according to this model is used to detect a very small amount of substance, it is considered that the probability that the substance encounters the metal particles becomes two times, and detection sensitivity can be increased in this point.

5.7. Experimental Example 6

One component of circularly polarized light can be separated into two components of linearly polarized light which are orthogonal to each other, have the same amplitude, and have a phase sift by $\pi/2$. That is, if incident light is circularly polarized light, and a Raman scattering signal is acquired, this includes simultaneous acquisition of Raman scattering light of linearly polarized light in the first direction and Raman scattering light of linearly polarized light in the second direction.

In all models used for computation in this experimental example, a light transmitting layer ($SiO_2$) film was formed on Au (metal layer) which was thick enough to prevent transmission of light. The thickness of the light transmitting layer was fixed to 60 nm. Metal particles arranged on the light transmitting layer were Ag, and were a column with the thickness direction of the light transmitting layer as a center axis, the size (the diameter of the bottom surface) of the column was 32 nm, and the height of the column was 4 nm.

In the model used in this experimental example, the interval P1 and the interval P2 were respectively 60 nm and 180 nm. A case where linearly polarized light in the first direction was irradiated (X60Y180), a case where linearly polarized light in the second direction was irradiated (X180Y60), a case where linearly polarized light in the same direction as a direction inclined at 30 degrees from the first direction toward the second direction was irradiated (30 deg), and a case where linearly polarized light in the same direction as a direction inclined at 60 degrees from the first direction toward the second direction was irradiated (60 deg) were plotted in a graph of Fig. 19.

Referring to Fig. 19, it is understood that the ECS of incident light (30 deg and 60 deg) linearly polarized in an oblique direction is located at the middle of the ECSs of incident light (X60Y180 and X180Y60) of the linearly polarized light in the first direction and the second direction.

From this, if circularly polarized light is incident as incident light, it is understood that the wavelength dependence of the ECS when the direction of linearly polarized light of incident light rotates at 0 to 90 degrees can be used at a time. With this, single Raman scattering measurement by circularly polarized light obtained substantially synonymous data with a case where Raman scattering measurement by linearly polarized light in the first direction and Raman scattering measurement by linearly polarized light in the second direction were performed two times.

5.8. Experimental Example 7

In this experimental example, enhancement of Raman scattering light of acetone will be illustrated.

If the wavelength of excitation light is $\lambda_i$, and the wavelength of scattering light is $\lambda_s$, the shift amount ($cm^{-1}$) of Raman scattering light is given by $1 / \lambda_i - 1 / \lambda_s$. It is known that acetone causes a Raman scattering shift with 787 $cm^{-1}$, 1708 $cm^{-1}$, and 2921 $cm^{-1}$.

If the excitation wavelength is 600 nm, the wavelength after Raman scattering becomes 630 nm, 669 nm, and 728 nm.

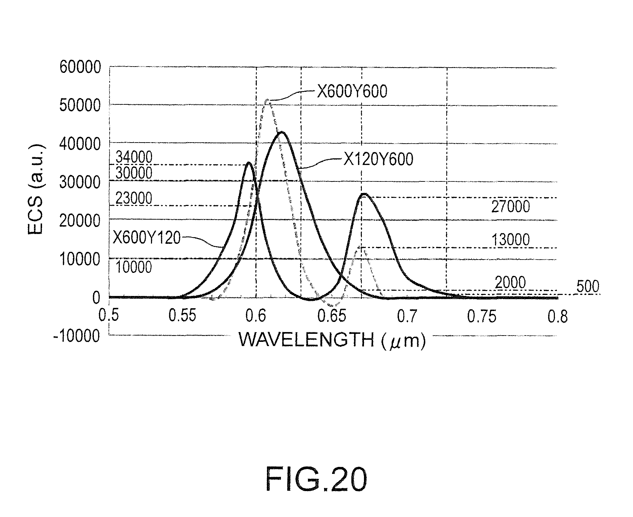

An enhancement degree profile of Raman scattering light is shown in Fig. 20 using this value and the ECSs of the respective models of X600Y600, X120Y600, and X600Y120 in the graph of Fig. 15. In Fig. 20, an auxiliary line of the wavelength 600 nm of excitation light and auxiliary lines of the wavelengths (630 nm, 669 nm, 728 nm) of the respective components of Raman scattering light were drawn.

Intensity of Raman scattering light is expressed by the product of the ECS at the wavelength of incident light and the ECS at the wavelength of scattering light. From the plots of the respective models of Fig. 20, the result of reading the ECSs at the respective positions of the wavelengths 600 nm, 630 nm, 669 nm, and 728 nm was collectively shown in Table 1.

Table 1

| Model | | X600Y600 | X120Y600 | X600Y120 |
|---|---|---|---|---|
| Excitation Light Wavelength 600 nm | ECS Value | 34000 | 23000 | 30000 |
| Scattering Light Wavelength 630 nm | ECS Value | 10000 | 30000 | 0 |
| Scattering Light Intensity | | 340000000 | 690000000 | 0 |
| Scattering Light Wavelength 669 nm | ECS Value | 13000 | 2000 | 27000 |
| Scattering Light Intensity | | 442000000 | 46000000 | 810000000 |
| Scattering Light Wavelength 728 nm | ECS Value | 0 | 0 | 500 |
| Scattering Light Intensity | | 0 | 0 | 15000000 |

Referring to Table 1, it is understood that, in the model of X600Y600, while Raman scattering light at 669 nm is largely enhanced, Raman scattering light at 728 nm is not enhanced. Meanwhile, in the model of X120Y600, enhancement of Raman scattering light at 630 nm was nearly two times the model of X600Y600, and enhancement of Raman scattering light at 669 nm was about 1/10 of the model of X600Y600. In the model of X600Y120, while there is no enhancement of Raman scattering light at 630 nm, enhancement of Raman scattering light at 669 nm was nearly two times the model of X600Y600, and enhancement of Raman scattering light at 728 nm was recognized.

From these, for example, as in a case where the interval P1 is 120 nm and the interval P2 is 600 nm, it was found that, if the metal particles were arranged anisotropically, Raman scattering light was enhanced while the polarization direction of excitation light changed at 90 degrees, thereby enhancing Raman scattering light in a wide band and the overall enhancement degree of Raman scattering light could significantly increase compared to a case of the arrangement with no anisotropy (for example, a case where both the interval P1 and the interval P2 were 600 nm).

The invention is not limited to the foregoing embodiments, and various modifications may be made. For example, the invention includes the substantially same configuration (for example, a configuration having the same functions, method, and result, or a configuration having the same object and effects) as the configurations described in the embodiments. The invention also includes a configuration in which a non-essential portion in the configurations described in the embodiments is substituted. The invention also includes a configuration in which the same functional effects as the configurations described in the embodiments can be obtained or a configuration in which the same object as the configurations described in the embodiments can be attained. The invention also includes a configuration in which a known configuration is added to the configurations described in the embodiments.

**Claims**

1.   An analysis device comprising:

an optical element which includes a metal layer, a light transmitting layer provided on the metal layer to transmit light, and a plurality of metal particles arranged at a first interval in a first direction and arranged at a second interval in a second direction intersecting the first direction on the light transmitting layer;
a light source which is configured to irradiate incident light incident on the optical element; and
a detector which is configured to detect light emitted from the optical element,
wherein the arrangement of the metal particles of the optical element satisfies the relationship of Expression (1), and
linearly polarized light in the same direction as the first direction and linearly polarized light in the same direction as the second direction are irradiated onto the optical element:

$$P1 < P2 \dots (1)$$

where, P1 represents the first interval, and P2 represents the second interval.

2.   An analysis device comprising:

an optical element which includes a metal layer, a light transmitting layer provided on the metal layer to transmit light, and a plurality of metal particles arranged at a first interval in a first direction and arranged at a second interval in a second direction intersecting the first direction on the light transmitting layer;

a light source which is configured to irradiate incident light incident on the optical element; and

a detector which is configured to detect light emitted from the optical element,

wherein the arrangement of the metal particles of the optical element satisfies the relationship of Expression (1), and

circularly polarized light is irradiated onto the optical element:

$$P1 < P2 \ldots (1)$$

where, P1 represents the first interval, and P2 represents the second interval.

3. The analysis device according to claim 1 or 2,
wherein the metal particles are arranged in the first direction in metal particle columns, and the arrangement of the metal particles of the optical element satisfies the relationship of Expression (2):

$$P1 < P2 \leq Q + P1 \ldots (2)$$

where, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is c, and an irradiation angle of incident light which is an inclination angle of incident light from a thickness direction of the light transmitting layer is $\theta$:

$$(\omega / c) \cdot \{\varepsilon \cdot \varepsilon(\omega) / (\varepsilon + \varepsilon(\omega))\}^{1/2} = (\omega / c) \cdot \varepsilon^{1/2} \cdot \sin\theta + 2m\pi$$

$$/ Q \quad (m = \pm 1, \pm 2, \ldots) \ldots (3).$$

4. The analysis device according to any one of claims 1 to 3,
wherein the detector is configured to detect Raman scattering light enhanced by the optical element.

5. The analysis device according to any one of claims 1 to 4,
wherein the light source is configured to irradiate incident light having a wavelength larger than the size of the metal particles in a thickness direction of the light transmitting layer and the size of the metal particles in the second direction onto the optical element.

6. The analysis device according to any one of claims 1 to 5,
wherein the interval P1 and the interval P2 are equal to or greater than 120 nm and equal to or smaller than 720 nm, or equal to or greater than 60 nm and equal to or smaller than 180 nm.

7. The analysis device according to any one of claims 1 to 6,
wherein, when the light transmitting layer is made of silicon dioxide, the thickness of the light transmitting layer is equal to or greater than 20 nm and equal to or smaller than 60 nm or is equal to or greater than 200 nm and equal to or smaller than 300 nm.

8. The analysis device according to any one of claims 1 to 7,
wherein the light source is configured to irradiate light having a wavelength longer than the interval P1.

9. A use of the analysis device according to claim 1 or any one of claims 3 to 8 as dependent on claim 1 for performing an analysis, comprising irradiating light onto the optical element and detecting light emitted from the optical element with the irradiation of light to analyze an object,
wherein linearly polarized light in the same direction as the first direction and linearly polarized light in the same direction as the second direction are irradiated onto the optical element.

**10.** A use of the analysis device according to claim 2 or any one of claims 3 to 8 as dependent on claim 2 for performing an analysis, comprising irradiating light onto the optical element and detecting light emitted from the optical element with the irradiation of light to analyze an object, wherein circularly polarized light is irradiated onto the optical element.

**11.** The use according to claim 9 or 10, wherein the metal particles are arranged in the first direction in metal particle columns, and the metal particles of the optical element are arranged so as to satisfy the relationship of Expression (2):

$$P1 < P2 \leq Q + P1 \quad \ldots \quad (2)$$

where, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is $c$, and an irradiation angle of incident light which is an inclination angle of incident light from a thickness direction of the light transmitting layer is $\theta$:

$$(\omega \ / \ c) \cdot \{\varepsilon \cdot \varepsilon(\omega) \ / \ (\varepsilon + \varepsilon(\omega))\}^{1/2} = (\omega \ / \ c) \cdot \varepsilon^{1/2} \cdot \sin\theta + 2m\pi$$

$$/ \ Q \ (m = \pm1, \ \pm2, \ \ldots) \ \ldots \ (3).$$

**12.** The use according to any one of claims 9 to 11, wherein the detector detects Raman scattering light enhanced by the optical element.

**13.** The use according to claim 12, wherein at least one of the interval P1 and the interval P2 is adjusted such that an enhancement degree profile of the optical element corresponds to the wavelength of Raman scattering light.

**14.** An optical element comprising:

a metal layer;
a light transmitting layer provided on the metal layer to transmit light; and
a plurality of metal particles arranged at a first interval in a first direction and arranged at a second interval in a second direction intersecting the first direction on the light transmitting layer,
wherein the metal particles of the optical element are arranged so as to satisfy the relationship of Expression (1), and
linearly polarized light in the first direction and linearly polarized light in the second direction can be irradiated to enhance Raman scattering light:

$$P1 < P2 \quad \ldots \quad (1)$$

where, P1 represents the first interval, and P2 represents the second interval.

**15.** An optical element comprising:

a metal layer;
a light transmitting layer provided on the metal layer to transmit light; and
a plurality of metal particles arranged at a first interval in a first direction and arranged at a second interval in a second direction intersecting the first direction on the light transmitting layer,
wherein the metal particles of the optical element are arranged so as to satisfy the relationship of Expression (1), and
circularly polarized light can be irradiated to enhance Raman scattering light:

$$P1 < P2 \ ... \ (1)$$

where, P1 represents the first interval, and P2 represents the second interval.

16. The optical element according to claim 14 or 15,
   wherein the metal particles are arranged in the first direction in metal particle columns, and the metal particles of the optical element are arranged so as to satisfy the relationship of Expression (2):

$$P1 < P2 \leq Q + P1 \ ... \ (2)$$

where, Q is given by Expression (3) when an angular frequency of a localized surface plasmon excited in the metal particle column is $\omega$, a dielectric constant of a metal constituting the metal layer is $\varepsilon(\omega)$, a dielectric constant around the metal layer is $\varepsilon$, light speed in a vacuum is c, and an irradiation angle of incident light which is an inclination angle of incident light from a thickness direction of the light transmitting layer is $\theta$:

$$(\omega \ / \ c) \cdot \{\varepsilon \cdot \varepsilon(\omega) \ / \ (\varepsilon + \varepsilon(\omega))\}^{1/2} = (\omega \ / \ c) \cdot \varepsilon^{1/2} \cdot \sin\theta + 2m\pi$$

$$/ \ Q \ (m = \pm 1, \ \pm 2, \ ...) \ ... \ (3).$$

17. A method of designing an optical element,
   wherein the optical element includes a metal layer, a light transmitting layer provided on the metal layer to transmit light, and a plurality of metal particles arranged at an interval P1 in a first direction and arranged at an interval P2 in a second direction intersecting the first direction on the light transmitting layer, and
   at least one of the interval P1 and the interval P2 is adjusted such that an enhancement degree profile of the optical element corresponds to a wavelength of Raman scattering light and a wavelength of excitation light of an object.

18. An electronic apparatus comprising:

   the analysis device according to any one of claims 1 to 8;
   a calculation unit which is configured to calculate health and medical information on the basis of detection information from the detector;
   a storage unit which is configured to store the health and medical information; and
   a display unit which is configured to display the health and medical information.

19. The electronic apparatus according to claim 18,
   wherein the health and medical information includes information relating to the presence/absence or the amount of at least one bio-related material selected from a group consisting of bacteria, viruses, protein, nucleic acids, and antigens/antibodies, or at least one compound selected from inorganic molecules and organic molecules.

# FIG. 1

# FIG. 2

FIG. 3

FIG. 4

FIG. 5

FIG. 6

Light Line
(n = 1)    ns = 1.33

SPP Au                    Au ns = 1

Au ns = 1.33

ANGULAR FREQUENCY: _ω (eV)

WAVE VECTOR: _k (eV/c)

# FIG. 7

FIRST
DIRECTION

SECOND
DIRECTION

21                    21
22 22                22 22

P2

P3

P1

200

THICKNESS
DIRECTION

⊗

20

20

20

# FIG. 8

Ag DIELECTRIC CONSTANT

FIG. 9

FIG.10

FIG.11

FIG.12

FIG.13

FIG.14

FIG.15

FIG.16

FIG.17

FIG.18

FIG.19

FIG.20

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

EP 14 15 7811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/002701 A1 (FATTAL DAVID A [US] ET AL) 1 January 2009 (2009-01-01) | 1,4,6,8 | INV. B82Y15/00 G01N21/55 |
| Y | * paragraph [0005] * <br> * paragraph [0022] * <br> * paragraph [0026] * <br> * paragraph [0032] * <br> * paragraph [0033] * <br> * figure 2 * <br> * figure 6 * <br> ----- | 18,19 | |
| Y | US 2010/220328 A1 (ISAKA KAZUO [JP] ET AL) 2 September 2010 (2010-09-02) <br> * paragraph [0138] - paragraph [0146] * <br> ----- | 18,19 | |
| A | YIZHUO CHU ET AL: "Double resonance surface enhanced Raman scattering substrates: an intuitive coupled oscillator model References and links", OPT. EXPRESS, vol. 19, no. 16, 19 July 2011 (2011-07-19), pages 14919-14928, XP055127289, * the whole document * <br> ----- | 1,3-9, 11-13, 17-19 | |

**TECHNICAL FIELDS SEARCHED (IPC)**

B82Y
G01J
G01N

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 7 July 2014 | Croucher, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

**INCOMPLETE SEARCH
SHEET C**

Application Number

EP 14 15 7811

Claim(s) completely searchable:
      1, 3-9, 11-13, 17-19

Claim(s) not searched:
      2, 10, 14-16

Reason for the limitation of the search:

The search has been carried on the basis of Claims 1, 3-9, 11-13 and
17-19, as requested by the Applicant in his letter dated 27.05.14.

**ANNEX TO THE EUROPEAN SEARCH REPORT
ON EUROPEAN PATENT APPLICATION NO.**                    EP 14 15 7811

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2014

| Patent document cited in search report | | Publication date | Patent family member(s) | | Publication date |
|---|---|---|---|---|---|
| US 2009002701 | A1 | 01-01-2009 | CN | 101688809 A | 31-03-2010 |
| | | | EP | 2158461 A2 | 03-03-2010 |
| | | | JP | 2010531995 A | 30-09-2010 |
| | | | US | 2009002701 A1 | 01-01-2009 |
| | | | WO | 2009002524 A2 | 31-12-2008 |
| US 2010220328 | A1 | 02-09-2010 | JP | 2007286045 A | 01-11-2007 |
| | | | US | 2010220328 A1 | 02-09-2010 |
| | | | WO | 2007108556 A1 | 27-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009002524 A

- WO 2005114298 A

**Non-patent literature cited in the description**

- *OPTIC EXPRESS,* 2011, vol. 19 (16), 14919-14928